# EUROPEAN PATENT SPECIFICATION

(11) **EP 0 449 975 B1**
(45) Date of publication and mention of the grant of the patent: **23.04.1997**
(21) Application number: 90901469.8
(22) Date of filing: 20.12.1989
(51) Int. Cl.: C09D 5/14

(54) **NON-TIN-BASED, LOW TOXICITY ANTI-FOULING AGENTS**
Antifoulingmittel mit niedriger Toxizität nicht auf Zinnbasis
AGENTS ANTISALISSURES NON STANNIFERES DE FAIBLE TOXICITE

(30) Priority: 21.12.1988 US 287899
(43) Date of publication of application: 09.10.1991
(73) Proprietor: BATTELLE MEMORIAL INSTITUTE, Columbus Ohio 43201-2693 (US)
(72) Inventor: DICK, Richard, J., Columbus, OH 43227 (US); McGINNISS, Vincent, D., Sunbury, OH 43074 (US)
(74) Representative: VOSSIUS & PARTNER
(86) International application number: US8905792
(87) International publication number: WO9006975

(56) References cited:
- GB-A- 1 519 882
- GB-A- 1 539 095
- GB-A- 2 159 056
- US-A- 3 139 350
- US-A- 3 214 280
- US-A- 3 347 686
- US-A- 3 912 519
- Dialog Information Services, File 351, World Patent Index 81-89, Dialog accession no. 82-01003E/01, Somar MFG KK: "Antifouling compsn. contg. 1,4-bis (halo-acetoxy)-2-butene and chloro-substd. naphthoquinone", JP 56156202, A, 811202, 8201 (Basic)
- Dialog Information Services, File 350, World Patent Index 63-80, Dialog accession no. 77-Y80598, Andrews Shokai KK: "Stain preventing agent for fishing nets - contains naphthoquinore and thiuram disulphide", JP 52117425, A, 771001, 7745 (Basic)
- STN International, File CA, Chemical Abstracts, volume 88, no. 5, 30 January 1978, (Columbus, Ohio, US), Ashino, Izumi: "Antifouling agent for fish net", abstract 33205r, & Japan.Kokai JP 52117425 1 Oct 1977 Showa, 2 pp. (Japan)
- STN International, File CA, Chemical Abstracts, volume 110, no. 23, 5 June 1989, (Columbus, Ohio, US), Oishi, Yutaka et al: "Diphenylamines and their use as pesticides against aquatic organisms", abstract 212359p, & Jpn. Kokai Tokkyo Koho JP 63243067 A2 7 Oct 1988 Showa, 5 pp. (Japan)
- STN International, File CA, Chemical Abstracts, volume 110, no. 13, 27 March 1989, (Columbus, Ohio, US), Nevell, T.G. et al: "Release of phenylurea and triazine herbicides from elastomer formulations into water" abstract 110055u, & Int. Biodeterior., 24(4-5), 255-63 (Eng)

## Description

The present invention relates to anti-fouling marine coatings and more particularly to novel low toxicity anti-fouling agents therefor.

One of the earliest needs for performance-oriented coatings was in the marine environment. Early formulations were designed around known toxins, such as copper and mercury compounds. Nineteenth Century marine coatings typically used creosote and natural drying oil formulations bearing the toxins. For ship bottoms, presently, anti-fouling compounds based on copper and tin commonly are incorporated into somewhat water-sensitive binders to afford gradual break-down of the film to permit a sustained release of the "poison". This required self-erosion property necessitates frequent repainting of ship bottoms, depending upon location and severity of exposure conditions.

Today's anti-fouling coatings use two general leaching mechanisms, depending on the type of resin matrix selected, soluble or insoluble. The insoluble-matrix type leaves a resinous skeleton intact as the toxicant particles are removed by dissolving into solution in seawater. This also is called the contact type because it depends upon the toxicant migrating to the surface and entering solution by making contact with seawater. Since the resins are somewhat water-permeable, the toxic particles may diffuse through the semi-permeable coating, and as one particle dissolves, another is exposed to seawater. The contact type contains several times more toxicant than the soluble type. The resulting thicker films of toxicant provide a longer service life to the anti-fouling topcoats. As a general rule, the insoluble-matrix type of paint does not contain an extended pigment, and the geometry of the dry film requires high toxicant loadings (52 to 74% by volume) to ensure the Cu₂O particles will be in continuous contact with each other. Below the level of cubic packing (52%), the resin will encase the Cu₂O particles and prevent solution; above the level of hexagonal packing (74%), the coating will be too-resin poor to maintain film integrity. These figures may vary somewhat in actual practice and it is common to adjust the leaching rate and the effective range of toxicant loading (e.g. by the addition of rosin or other natural resins). In common practice, both natural resins and extender pigments are frequently used. When high levels of resin are used and high erosion might be expected, tougheners such as ester gum, ethyl cellulose, and modified rubbers are added ("Paint Handbook", G.E. Weismantel, McGraw-Hill, New York, New York, pp 14-43 and 14-44, Chapter 14 "Marine Paints", authored by R.J. Dick).

With respect to the toxins presently used, recent U.S. federal legislation has severely restricted the use of organo-tin anti-fouling agents Toxicity concerns appear to be a prime motivation behind this recent legislation. Accordingly, there is a substantial need in the anti-fouling paint area for new, low toxicity anti-fouling agents.

The present invention is addressed to a marine anti-fouling composition of a thermoplastic or thermosetting binder, solvent, anti-fouling agent, and optionally conventional additives, e.g. leaching agents, opacifying pigments, etc. More specifically, the present invention is addressed to new, low toxicity anti-fouling agents which comprise pesticide or herbicide compounds having a χ value of between about 0.01 and 3, a Z value for vinyl or aromatic compounds of between about 0.01 and 0.08, and an LD50 value of greater than 200 mg/kg against rats or mice wherein said anti-fouling agent is reacted with a coupling agent functionality for further reaction to form an oligomer or polymer bearing said anti-fouling agent. Such pesticide or algicide compounds broadly can be selected from heterocyclic compounds, aromatic compounds substituted with heteroatom substituents, various amino compounds, carbocyclic vinyl ether ketones, certain phospho compounds, certain polychlorinated carbocyclic and acyclic compounds, certain chlorinated carbocyclic carboxylates, antimony tartrate, boric acid, and cupric oleate. Exemplary aromatic compounds include diaromatic compounds linked with a sigma bond or with a carbon or heteroatom linkage, fused aromatic rings, and mono-aromatic compounds. Another aspect of the present invention comprises the linking of the novel low toxicity anti-fouling agents into the composition for improved retention, e.g. their reaction with the binder.

Advantages of the present invention include the ability to formulate marine anti-fouling coating compositions which contain low toxicity anti-fouling agents. An other advantage is the ability to formulate marine anti-fouling coating compositions wherein the low toxicity anti-fouling agents are better retained by their linking into the coating composition itself. These and other advantages will be readily apparent to those skilled in the art based upon the disclosure contained herein.

With the curtailment in permissible use of organo-tin anti-fouling agents due to their human toxicity characteristics, the art truly needs to enable anti-fouling agents which exhibit low human toxicity characteristics. Once such agents are identified, they must be compatible with remaining formulation ingredients in marine coatings and other marine compositions. Also, these low toxicity anti-fouling agents must display in situ activity and/or release characteristics making them practical.

The non-tin anti-fouling agents of the present invention broadly are selected from compounds which have exhibited terrestrial biologic activity, e.g. known herbicides and pesticides. For present purposes, herbicides are to be interpreted broadly as including not only compounds which selectively and/or broadly kill various plant life, but also include various plant growth regulators, algicides, and the like. Pesticides, for present purposes, also should be broadly interpreted as compounds which are selectively and/or broadly toxic for harmful plant infestations, such as acaricides. These compounds, however, must exhibit low toxicity to humans. For present purposes, "low toxicity to humans" is determined when the LD50 value is greater than 200 mg/kg against rats or mice.

Within the broad spectrum of biologically active compounds described above, these compounds also must possess a χ factor of between about 0.01 and 3, and a Z value for vinyl or aromatic compounds of between 0.01 and 0.08. The χ factor is based upon the McGinniss predictive relationship as defined in Organic Coatings in Plastic Chemistry, vols. 39 and 46, pp 529-534 and 214-223, respectively (1978 and 1982, respectively). The McGinniss predictive relationship defines the χ factor as a weight fraction of heteroatoms contained in the monomer or in the monomer repeat unit of an oligomer or polymer. The McGinniss predictive relationship defines the Z parameter as the weight fraction of π electrons contained in the monomer or in the monomer repeat unit of an oligomer or polymer (e.g. π electron density of aromatic or vinyl compounds). Biologically-active compounds (as defined herein) that possess a χ factor and Z parameter within the ranges defined herein, and possess the requisite LD50 value, will be compounds which display anti-fouling characteristics in marine coatings. The χ factor may be established by the active compounds containing heteroatoms selected from, for example, sulfur, oxygen, nitrogen, halogen and mixtures thereof.

Though such compounds will exhibit anti-fouling characteristics, not all may be totally acceptable for some high performance marine coatings requirements, (ranging from submarine exterior coatings to anti-fouling polymer concrete). Nevertheless, the compounds will possess anti-fouling characteristics and low toxicity to humans which makes their identification significant in the arts efforts at replacing conventional organo-tin anti-fouling agents. Moreover, these new anti-fouling agents also possess functionality enabling them to be linked into a binder system and still exhibit anti-fouling activity. By linking the anti-fouling agent into the binder itself, unwanted leaching out of the anti-fouling agents over time will be minimized and longer term performance should result. Also, it is possible to complex some of the new anti-fouling agents with various non-tin metals and enhance the biologic activity thereof. Accordingly, the compounds disclosed herein are candidate reactants for synthesizing oligomeric/polymeric species having anti-fouling activity for inclusion in marine compositions for providing anti-fouling activity.

The following biologically-active compounds illustrate the LD50 values, χ factor, and Z parameter requirements possessed by the novel organo anti-fouling agents/reactants of the present invention and are offered as illustrative of the precepts of the present invention.

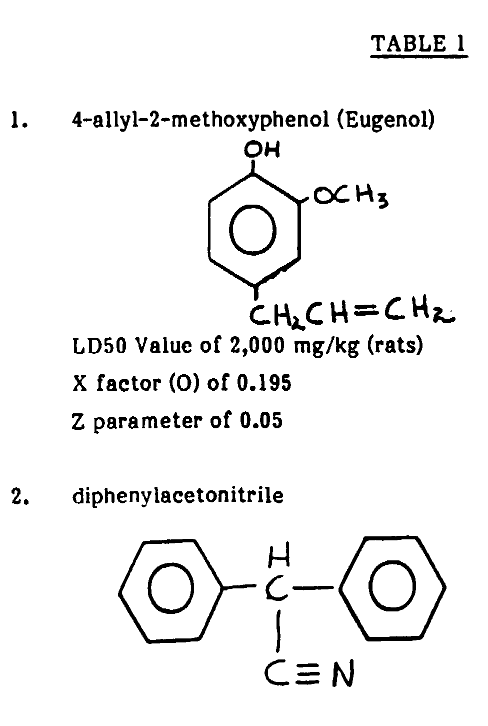

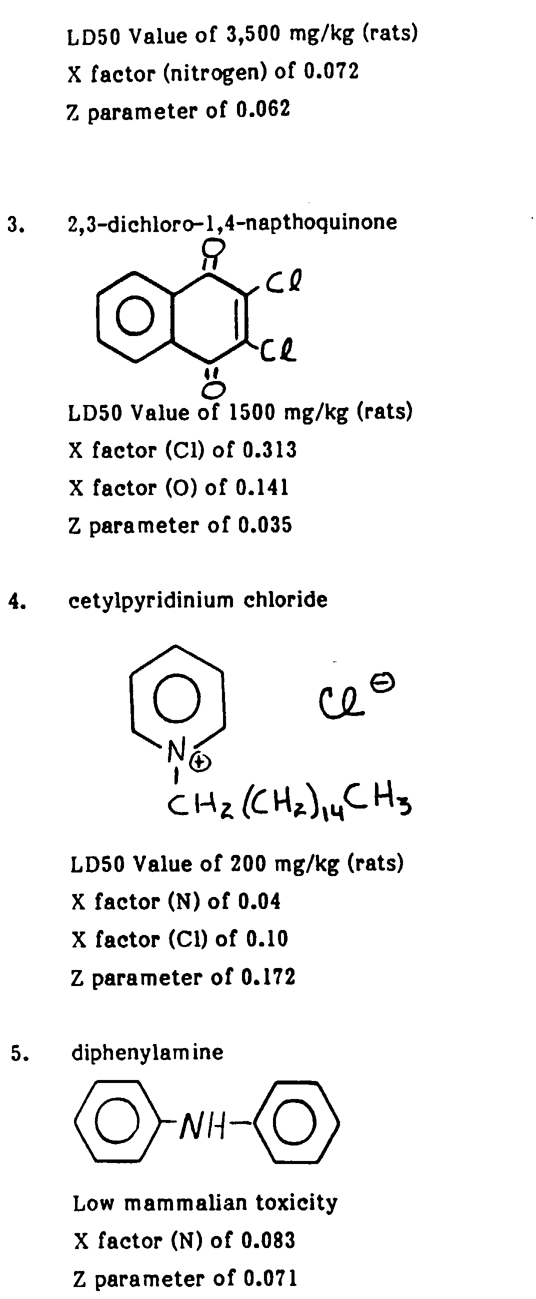

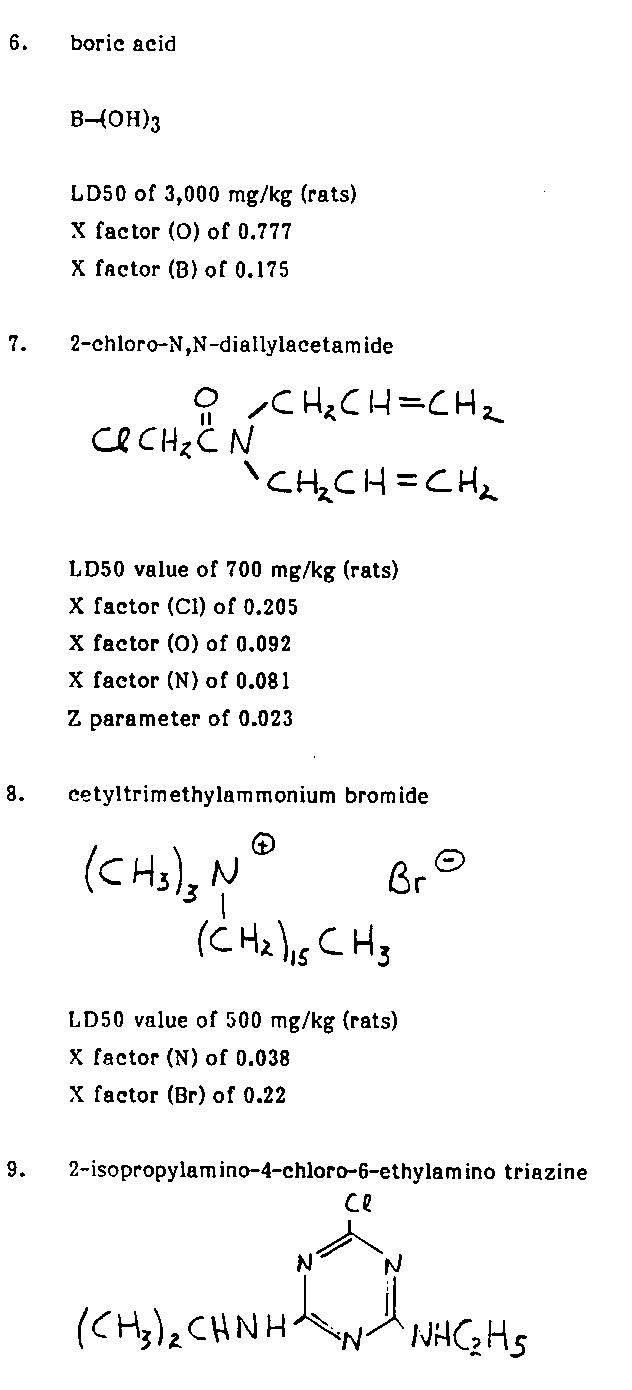

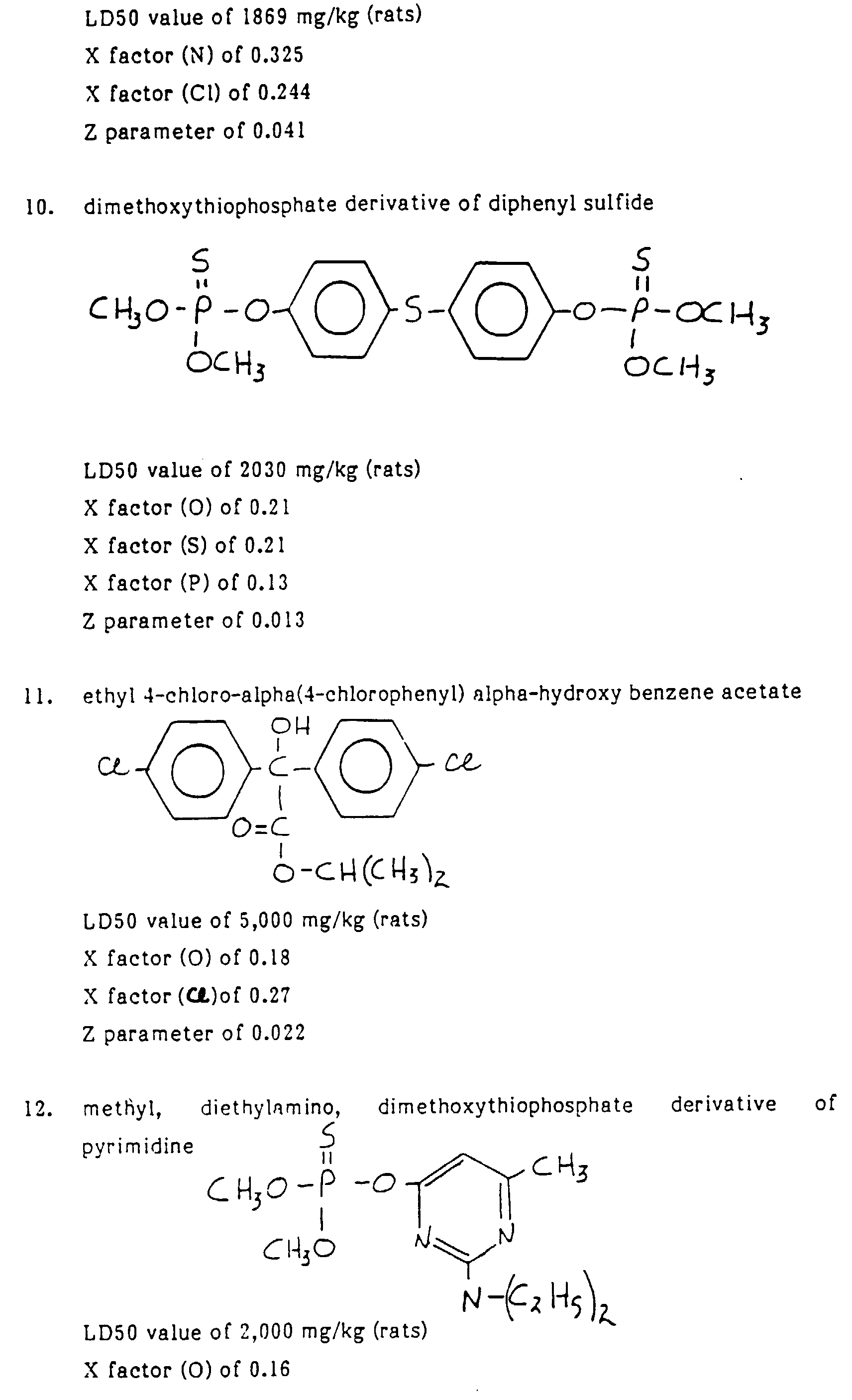

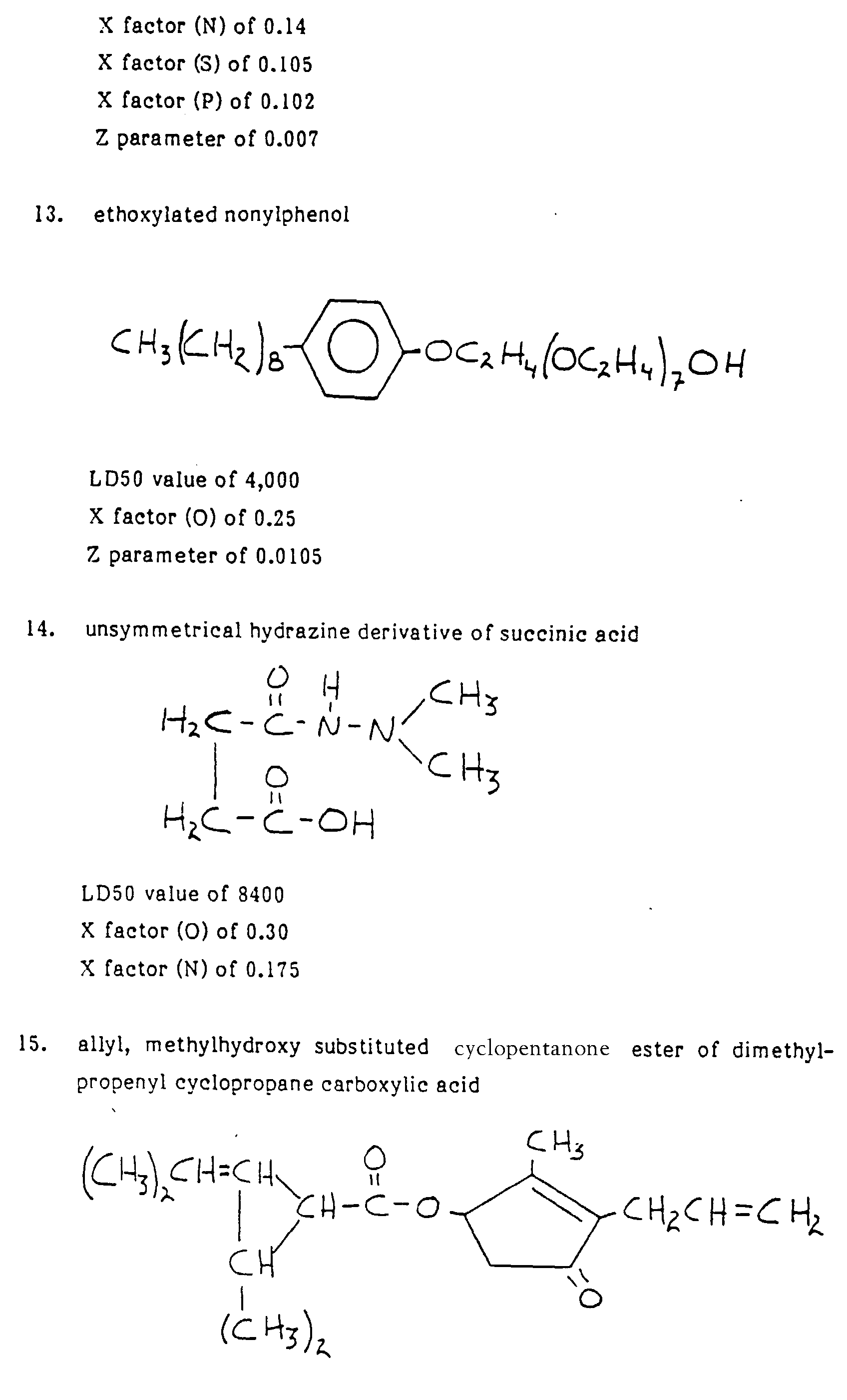

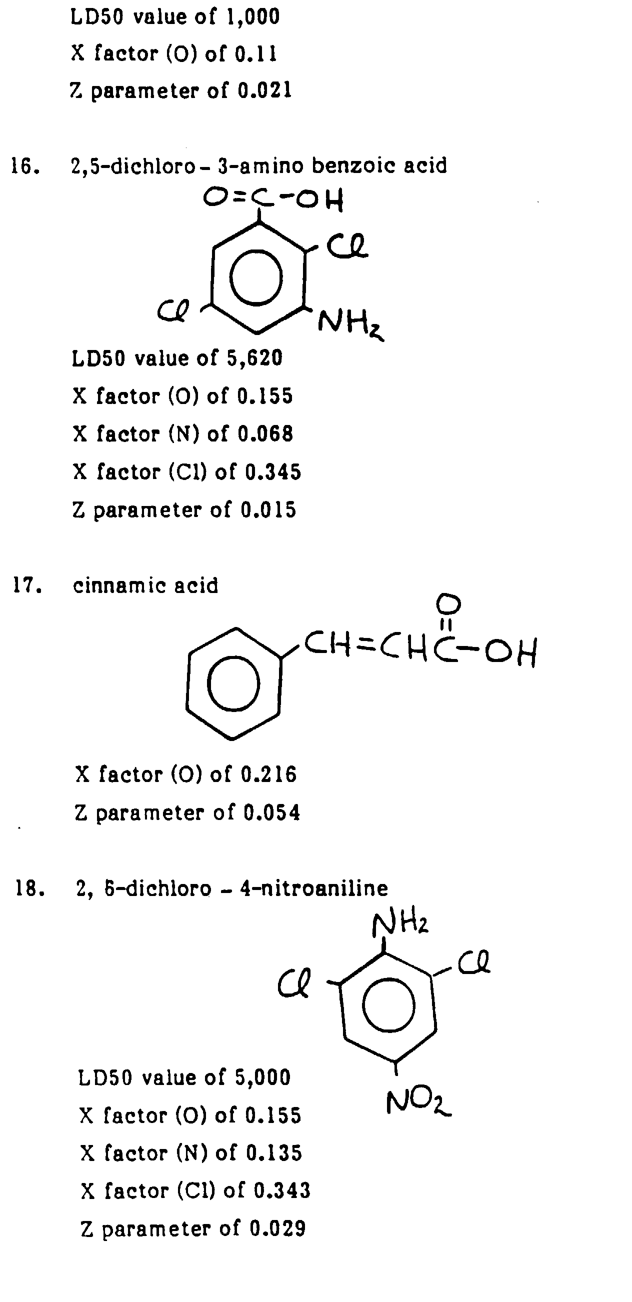

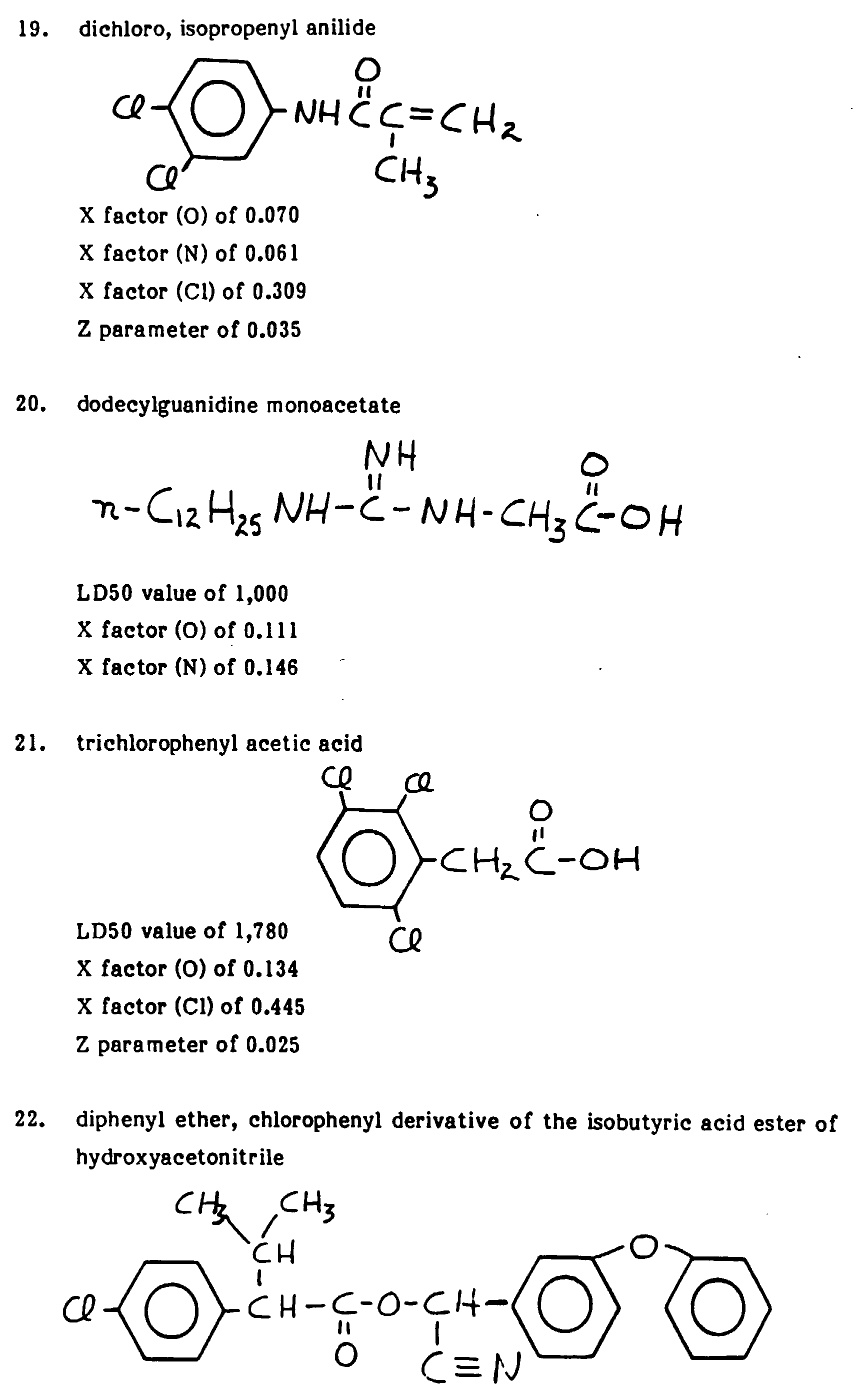

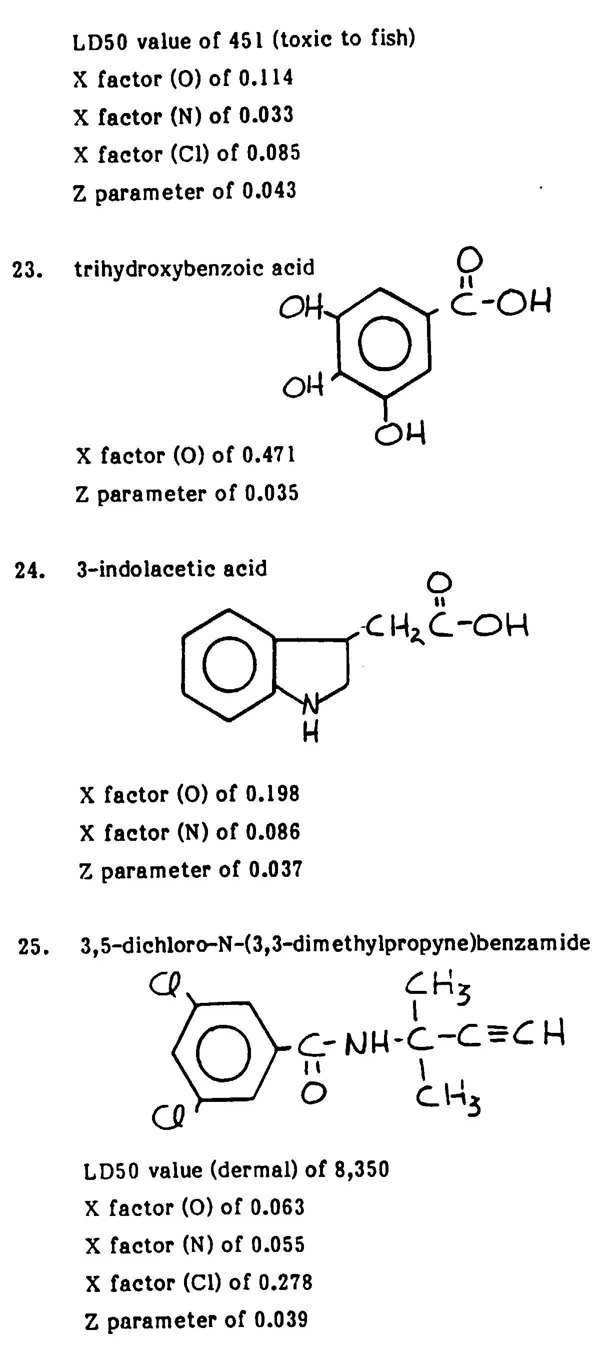

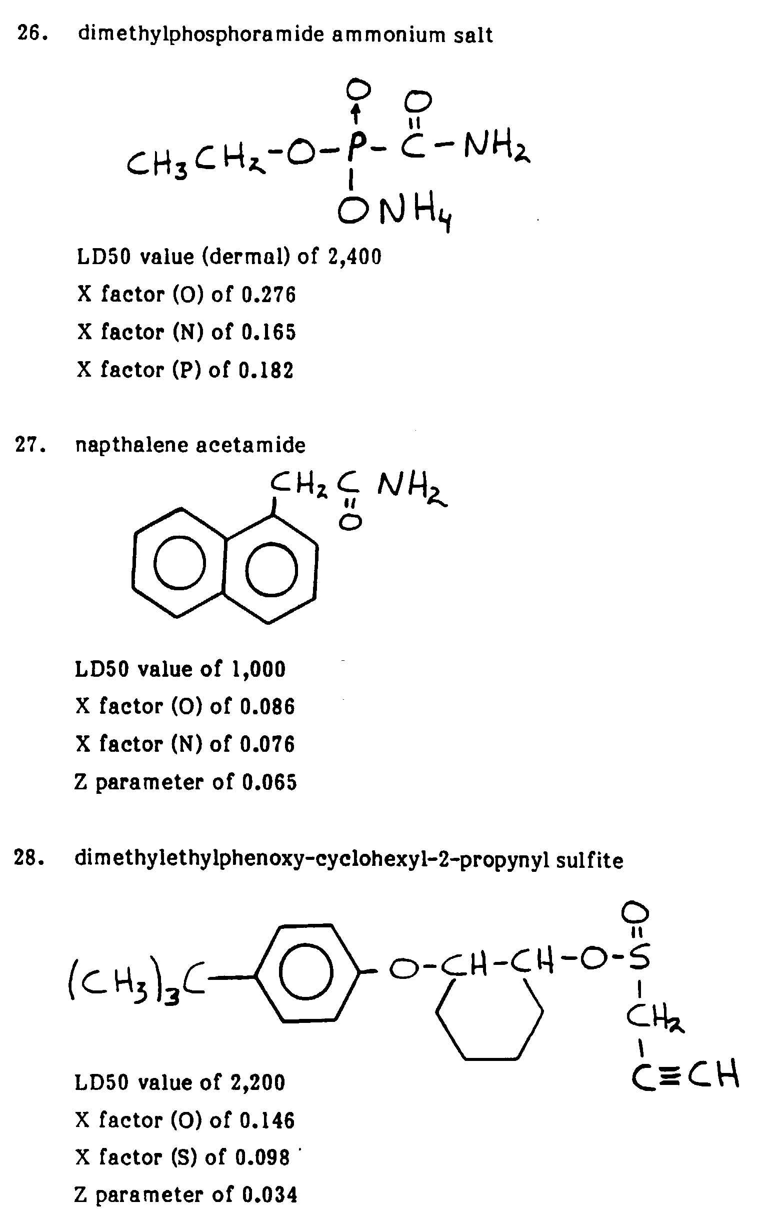

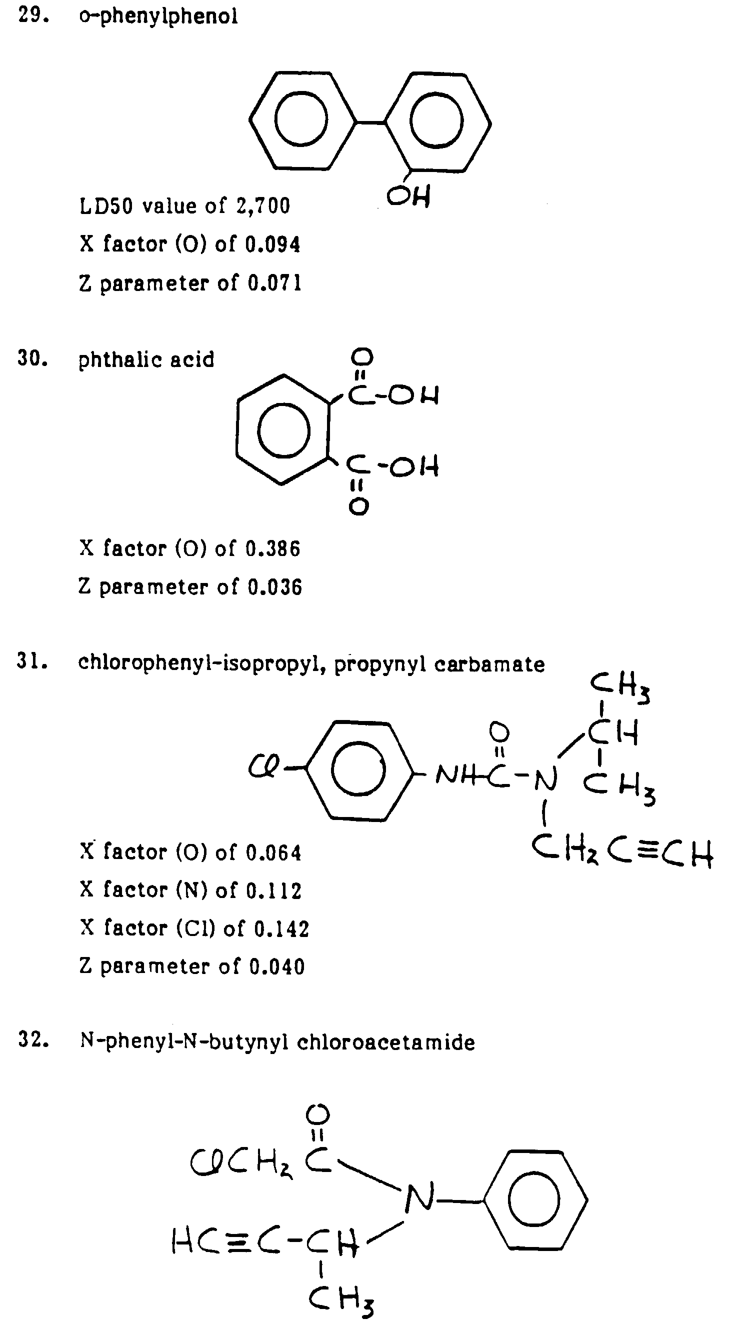

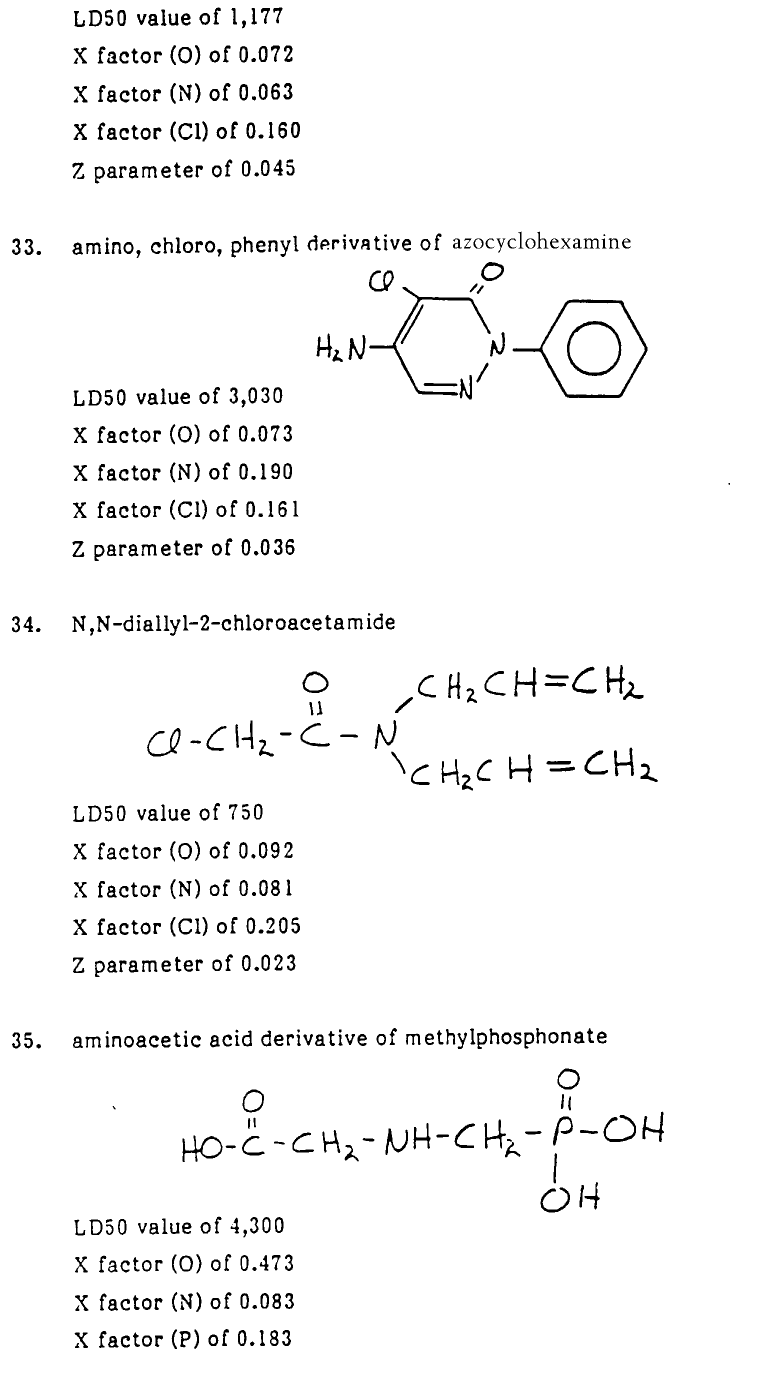

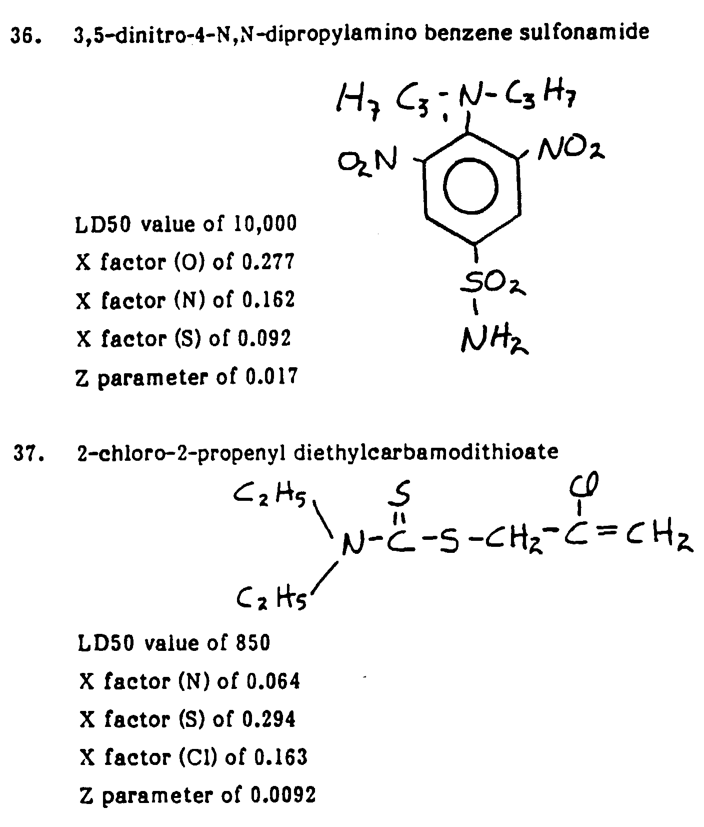

As the data will demonstrate, the foregoing biologically-active compounds all display efficacy as anti-fouling agents. Their diminished toxicity to humans is a decided benefit compared to conventional organo-tin anti-fouling agents.

Broadly, the low toxicity anti-fouling agents of the present invention can be described as biologically-active terrestrial compounds (e.g. pesticides and herbicides) that are heterocyclic, aromatic with heteroatomic substituents, amino compounds, and carbocyclic ketone vinyl ethers. The aromatic compounds can be further identified as mono-aromatic, fused aromatic ring compounds, and diaromatic compounds linked with a sigma bond or with a carbon or divalent heteroatomic substituent. In addition to the ring compounds, hetero-substituted aliphatic compounds that are biologically active and possess the requisite χ value and Z parameter also may find use as anti-fouling agents in accordance with the precepts of the present invention. Additionally, compounds which do not quite fit any of the foregoing definitions also should be recognized as included within the scope of the anti-fouling agents of the present invention. These include boric acid which has been demonstrated to be quite active as an anti-fouling agent, as the data will testify. Additional compounds include, for example, antimony tartrate and cupric oleate. Illustrative of additional low toxicity anti-fouling agents/reactants of the present invention include those set forth in Table 2 below.

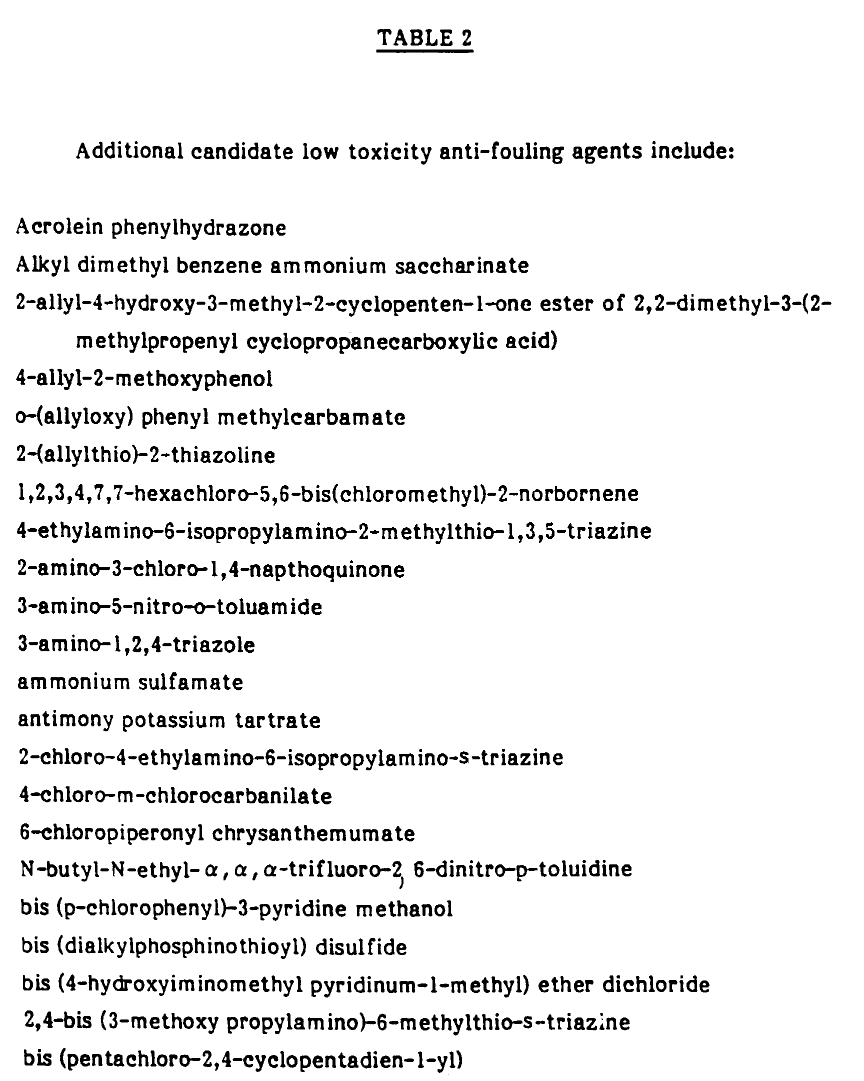

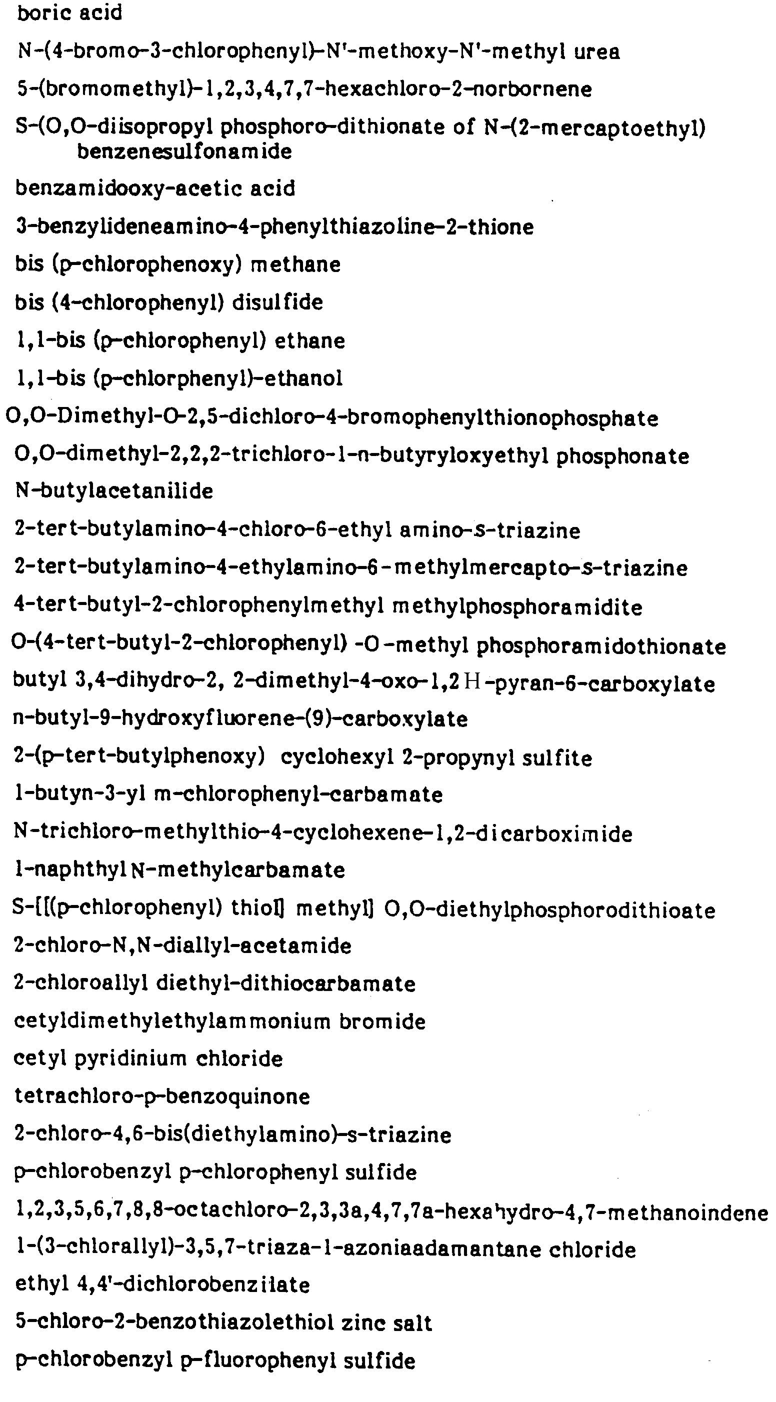

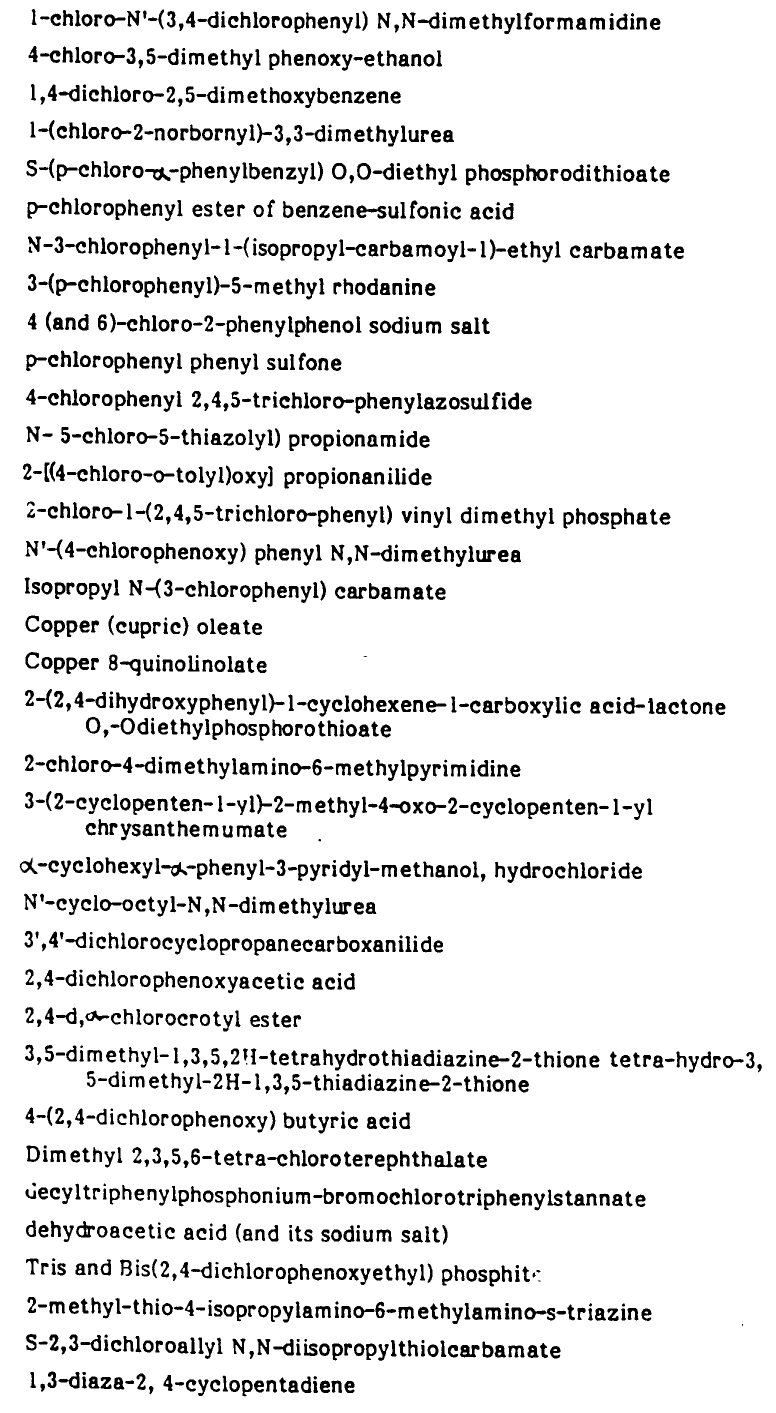

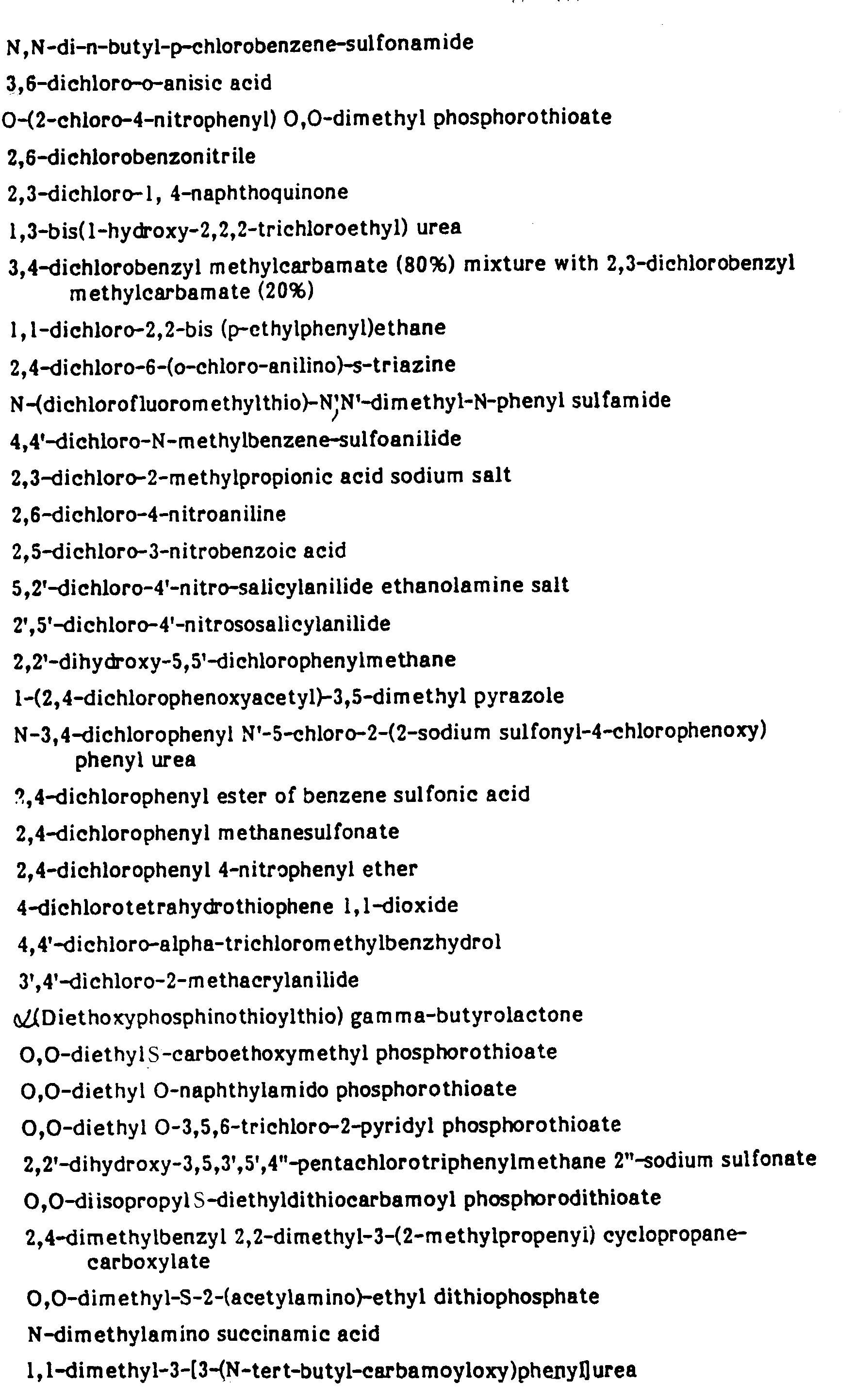

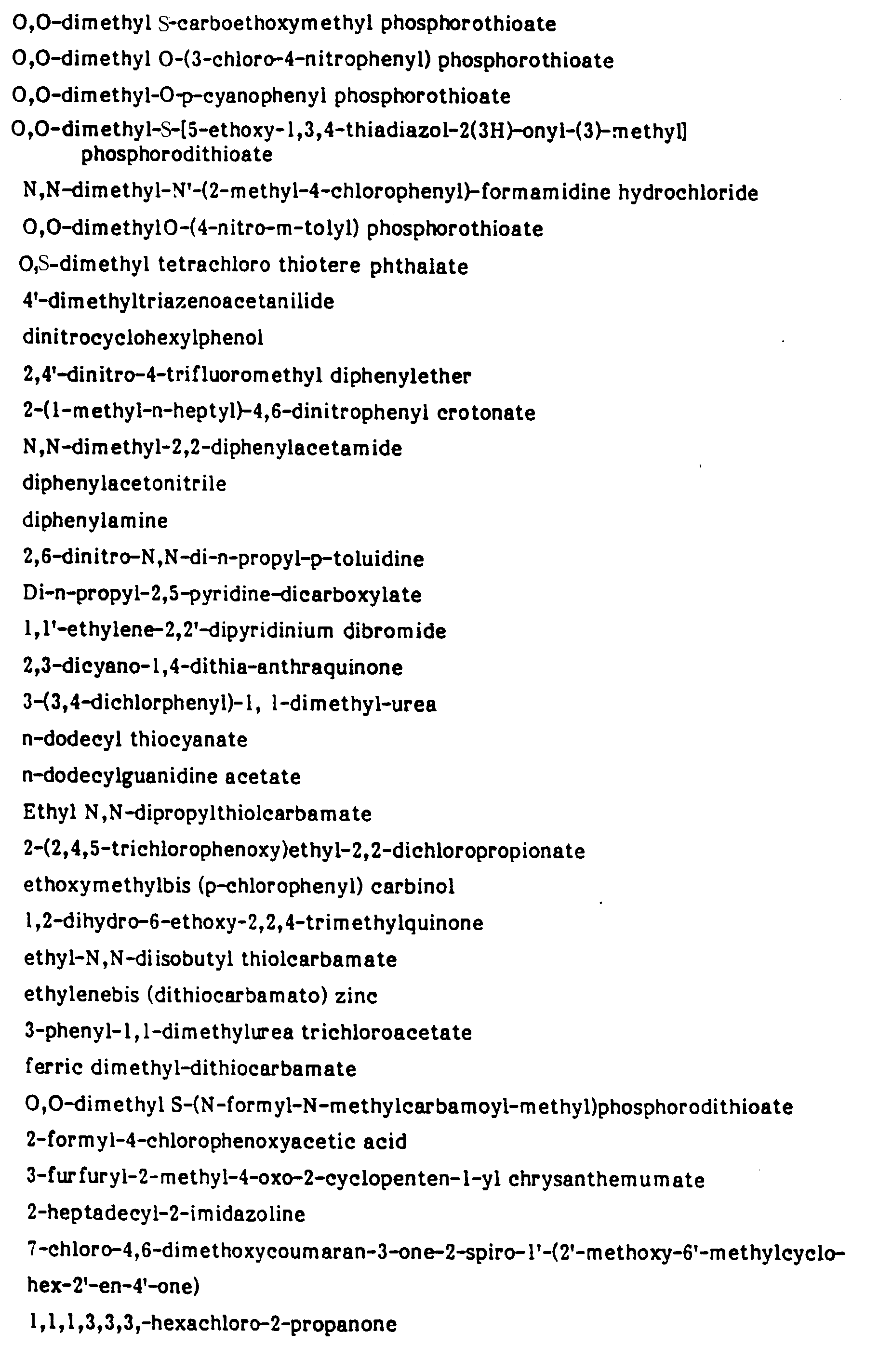

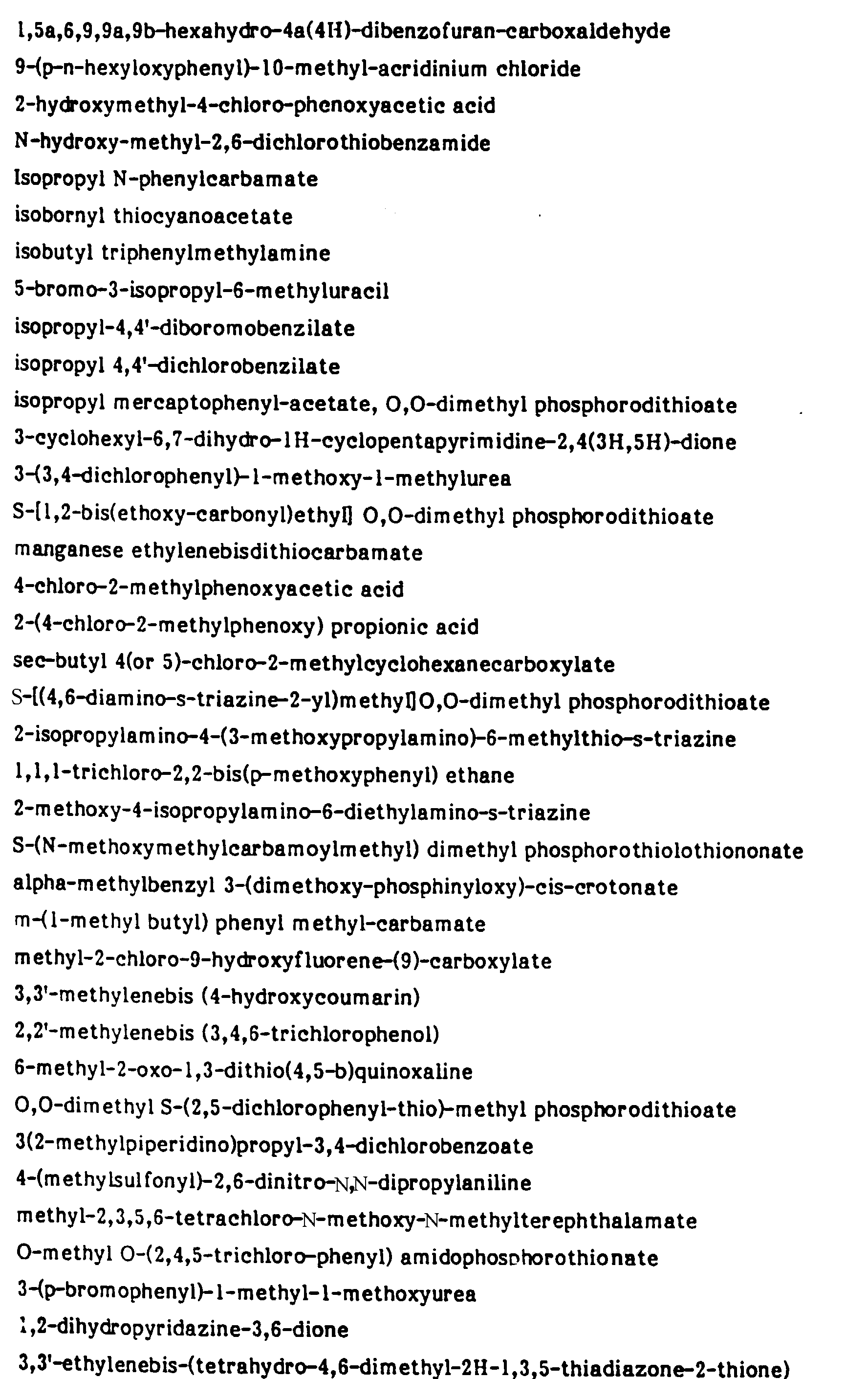

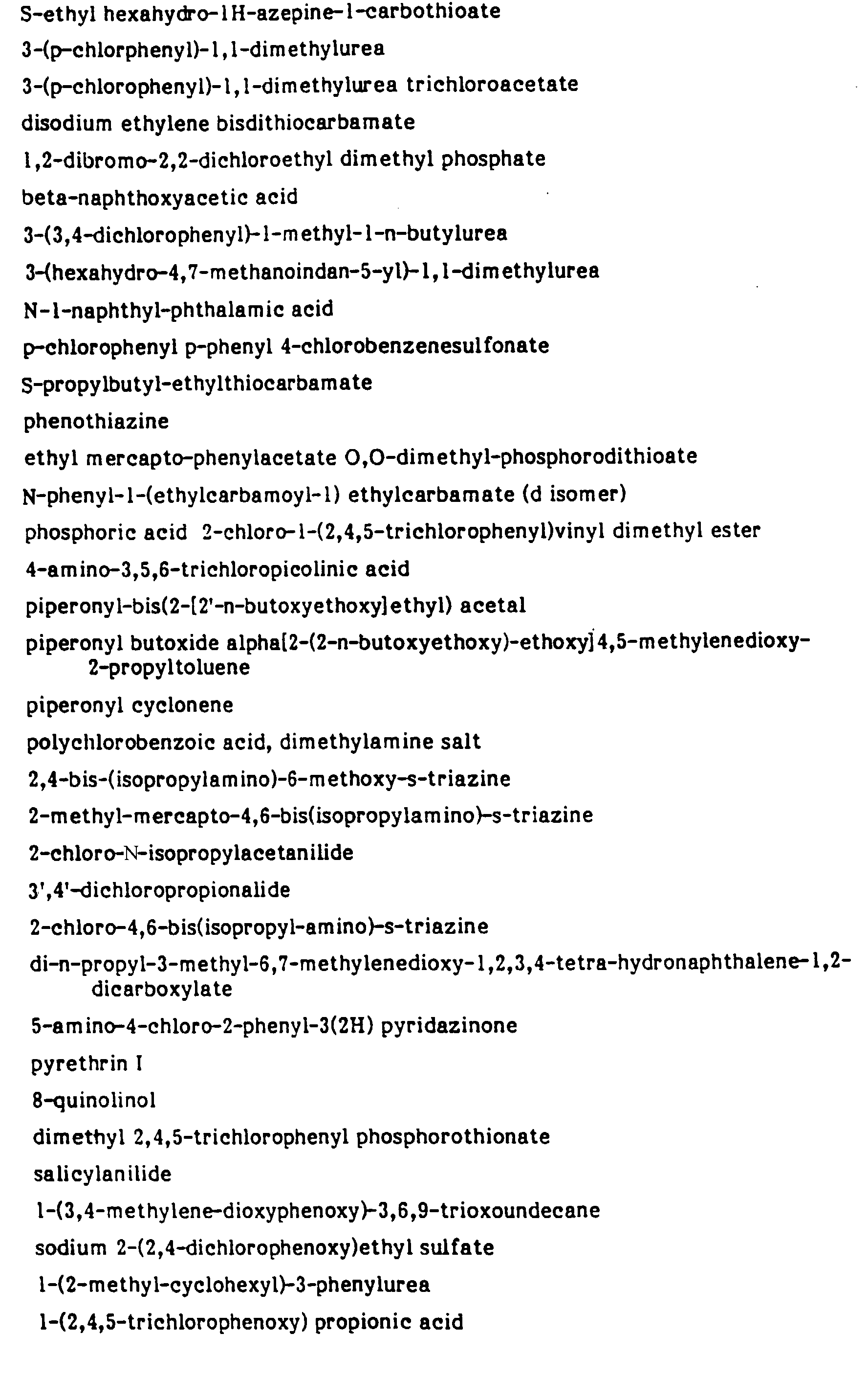

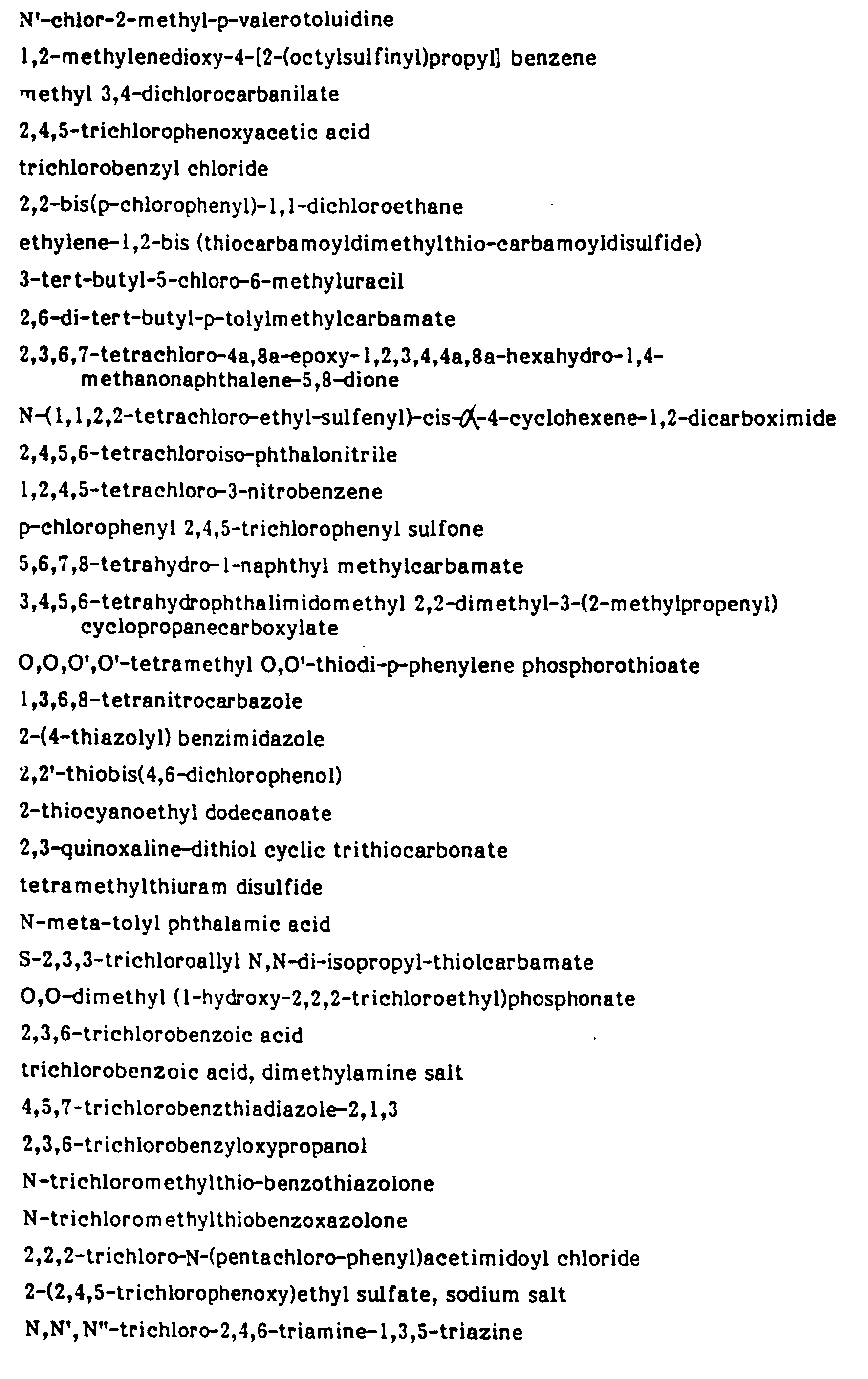

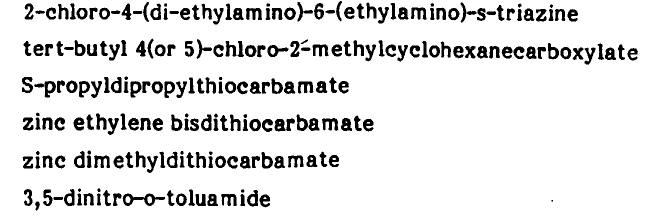

As noted above, the ability to polymerize an anti-fouling agent into the coating backbone has the apparent advantage of retaining the anti-fouling agent within the coating with concomitant prevention of its being leached out of the coating by the sea water at an unacceptable rate. Activity of the anti-fouling agent, though, must be preserved following its reaction. Based upon the data as set forth in the examples, it appears that coupling of anti-fouling agents with coupling agents (monomers, oligomers, or polymers) which are relatively high in molecular weight (e.g. above about 300 molecular weight) and substantially deplete in heteroatom content (especially nitrogen and sulfur atoms) dilutes the activity of the anti-fouling agent to such a level that its performance is substantially compromised. Lower molecular weight coupling agents, even those deficient in heteroatom content, can be tolerated providing that the resulting structure (oligomer or polymer) retains its χ value and Z parameter as defined above. It is desirable, however, that the coupling agents contain significant heteroatom content, especially nitrogen and sulfur atoms, in order to maintain the anti-fouling activity of the anti-fouling agent being converted into oligomeric or polymeric form. While not all anti-fouling agents disclosed herein can provide acceptable polymeric derivatives, the anti-fouling agents of the present invention are candidates suitable for being evaluated with respect to incorporation into an oligomeric/polymeric structure for formulating marine compositions devoid of tin content, yet displaying anti-fouling activity.

The formulation of the marine coatings containing the anti-fouling agents of the present invention is practiced in conventional fashion as those skilled in the art appreciate utilizing conventional film-forming binders appropriate for marine environments. Marine compositions broadly for present purposes include coatings, elastomers, sealants, caulks, grout, and like polymeric structures appropriate for the marine environment. The form of the marine composition can be as a coating, as rigid or elastomeric (including foamaceous) objects, as a sealant, as a gel for cementitious and plastic surfaces, as polymer concrete, or as a three-dimensional configured structure such as villous trailing fingers in the exterior of marine vessels. In addition, the anti-fouling agents of the present invention may be chemically or physically incorporated into cementitious surfaces. Conventional additives, organic solvents (including reactive solvents or diluents), and the like are incorporated into the formulation. The proportion of anti-fouling agent generally is between about 1 and 20 weight percent by weight of the formulation.

The following examples show how the present invention has been practiced but should not be construed as limiting. In this application, all percentages and proportions are by weight and all units are in the metric system, unless otherwise expressly indicated. Also, all citations are expressly incorporated herein by reference.

### EXAMPLES

### EXAMPLE 1

Test panels were 15.24 cm x 30.48 cm (6 in x 12 in) in dimension and constructed of white plastic top surface and a black plastic bottom surface. The test coating sample utilized 20 weight parts of the anti-fouling agent incorporated into a resinous vinyl binder (80 weight parts of a vinyl chloride polymer, VAGH, Union Carbide Carbide Corporation, New York, New York) reduced in methyl ethyl ketone solvent to 50% solids content. The coating sample was applied to both surfaces of the test panels at a film thickness of about 5 mils dry. The test panels then were exposed horizontally with the white surface upward and the black surface downward in the ocean at Daytona Beach, Florida, U.S.A. Control panels (uncoated) also were tested. The panels were viewed one month and four months after immersion exposure and rated visually for the presence of hard or soft marine life (primarily barnacles and grass). A rating of 10 is perfect (no marine organisms) and a rating of 0 indicates a complete failure of the panel to resist marine organisms. The following results were recorded:

**TABLE 3**

| | | General Rating | |
|---|---|---|---|
| Panel No. Anti-Fouling Agent | | 1 mo. | 4 mos. |
| | | Avg. of top and bottom of the panel readings | |
| 13-A1 | Eugenol, 99% (4-allyl-2-methoxyphenol) | 9 | 3 |
| 13-A2 | Eugenol, 99% (4-allyl-2-methoxyphenol) | 7 | 3 |
| 13-B1 | Diphenylacetonitrile | 7 | 3 |
| 13-B2 | Diphenylacetonitrile | 5 | 2 |
| 13-C1 | 2,3-Dichloro-1,4-naphthoquinone | 7 | 6 |
| 13-C2 | 2,3-Dichloro-1,4-naphthoquinone | 5 | 3 |
| 13-D1 | Cetylpyridinium chloride | 5 | 3 |
| 13-D2 | Cetylpyridinium chloride | 5 | 3 |
| 13-E1 | Diphenylaniline | 5 | 4 |
| 13-E2 | Diphenylaniline | 5 | 3 |
| 14-A1 | Cetyltrimethylammonium bromide | 5 | 5 |
| 14-A2 | Cetyltrimethylammonium bromide | 5 | 2 |
| 14-B1 | Boric Acid | 5 | 6 |
| 14-B2 | Boric Acid | 5 | 2 |
| 14-C1 | N,N-diallyl-2-chloroacetamide | 5 | 4 |
| 14-C2 | N,N-diallyl-2-chloroacetamide | 5 | 4 |
| Control | Uncoated Panel | 0 | 0 |

The above-tabulated results show that all of the candidate anti-fouling agents displayed anti-fouling properties at the end of one month immersion. Moreover, anti-fouling properties still are exhibited by the anti-fouling agents after four months immersion.

### EXAMPLE 2

In order to bind an organic anti-fouling agent into a polymeric structure, a three-neck reaction flask fitted with a mechanical stirrer, thermometer, and reflux condenser was charged with a polysulfide polymer (200 g of LP-3 polysulfide polymer, Thiokol), 1,2-dicyano tetrachlorobenzene (100 g of Nopocide brand, Diamond Shamrock), potassium hydroxide (80 g), and dimethyl sulfoxide (100 ml). The reaction mixture was heated for three hours to a temperature of 105°C, cooled to room temperature, washed, and subjected to vacuum for removal of solvent. The resulting polymeric structure 38159-23 can be represented conventionally as follows:

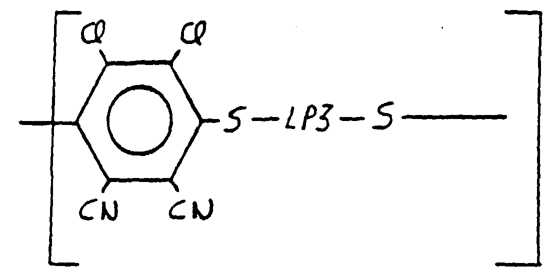

### EXAMPLE 3

An anti-fouling agent-modified adduct was synthesized in accordance with the following reaction scheme. Toluene (100 ml) was added to a roundbottomed flask followed by the addition of hydroxyethyl methacrylate (14 ml) and toluene diisocyanate (17 ml). This mixture was stirred for one hour at room temperature followed by the addition of triethylamine catalyst (three drops). After two hours, 3,4-dichloroaniline (16 ml) was added to the ) solution which then was heated to 50° C and held for 10 hours. The resulting solid product was filtered through number 40 filter paper and washed with additional aliquots of toluene and hexane. Infrared analysis showed the expected urethane-amide structures consistent with the desired reaction product 38159-33 which is illustrated conventionally below.

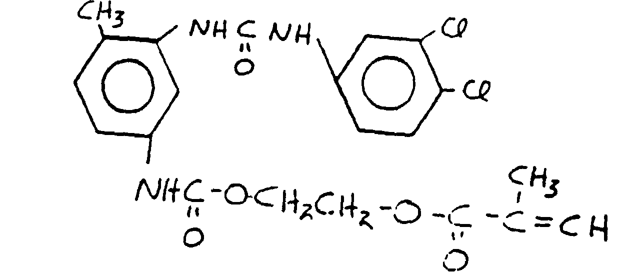

### EXAMPLE 4

A pressure reactor fitted with a pressure gauge was loaded with 3-(3,4-dichlorophenyl)-1,1-dimethyl urea (45g) and propylene oxide (150 ml). The reactor was sealed and heated to 80°C (a pressure reading of 50 psi) and held for 20 hours. The sample removed from the reactor was analyzed by IR and showed broadening of the NH bands and the presence of hydroxyl functionality and some polyether functionality (1100 cm⁻¹). Preparation of this material is similar to that preparation described in J. Polymer Science, vol. 15, 427-446 (1955). Reaction production 38159-32 can be represented conventionally below. It will be observed that the reaction product contains a hydroxyl group which could be reacted with isocyanate or other functionality for its incorporation into a curable resin.

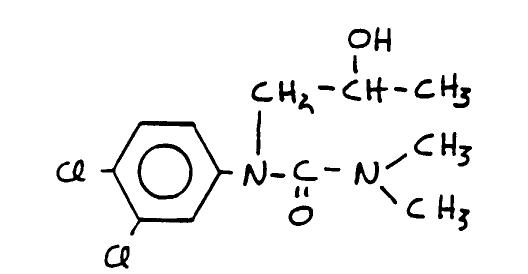

### EXAMPLE 5

To 1,4,5,6,7,7-hexachloro-5-norbornene-2,3-dicarboxylic anhydride (37 g) was added hydroxyethyl methacrylate (37 ml). This reaction mixture was heated to 87°C for three hours to produce reaction product 38159-34 which can be represented conventionally as follow:

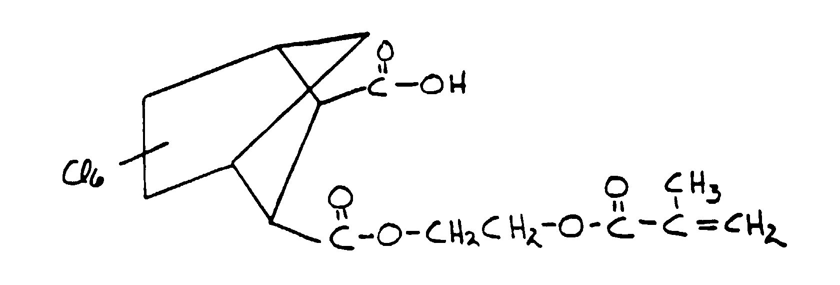

### EXAMPLE 6

Addition of a 10% solution of CuCl₂ in ethanol to a 10% solution of 8-hydroxyquinaldine formed a dark brown complex immediately. This complex 38159-35/37 was washed with hexane and dried without further purification. The structure of the complex can be represented conventionally as follows:

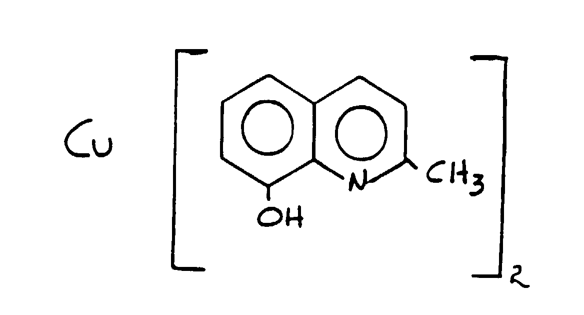

### EXAMPLE 7

The procedure of Example 3 was repeated using 2,5-dichloroaniline instead of 3,4-dichloroaniline. Reaction product 38159-43 is illustrated below:

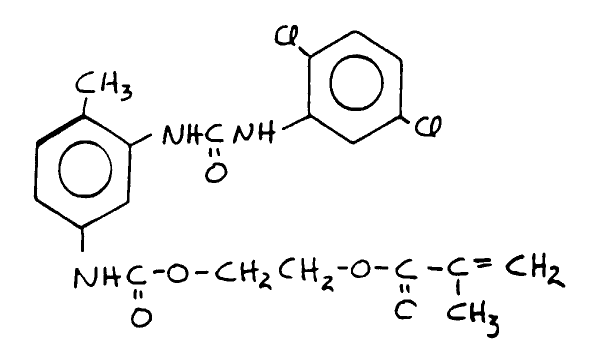

### EXAMPLE 8

1,5-napthalene diisocyanate (25 g) was reacted with 1,3-diaza-2,4-cyclopentadiene (14 g) using the urethane reaction procedure as set forth in Example 3. The resulting reaction product 38159-50 is represented conventionally below:

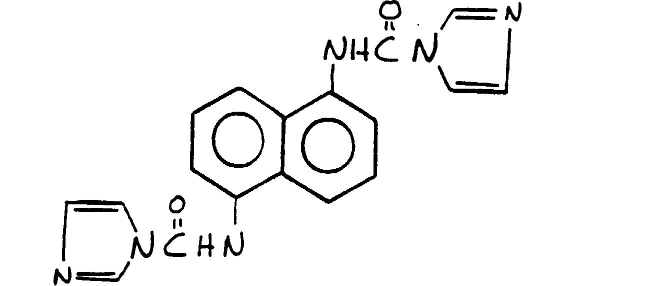

### EXAMPLE 9

To DER 331 epoxy resin (Dow epoxy resin, about 300 molecular weight, epoxide equivalent of 150, 33 g) was added 35 ml of toluene and phenothiazine (40 g). This mixture was heated to 90°C for three hours until a clear solution was obtained. The product was used without any further purification. Reaction product-38159-51 can be illustrated conventionally below:

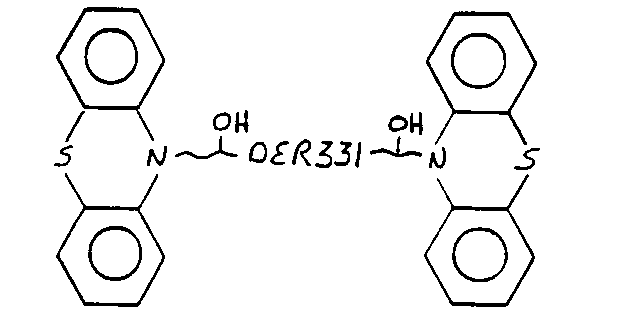

### EXAMPLE 10

Two different modified polymeric structures were prepared. Polymeric structure 38159-41 was prepared by adding DER 331 resin (11 g) to 2-mercaptobenzothiazole (10 g) dissolved in toluene solvent (35 ml). This reaction mixture was heated to 90°C for three hours until a clear solution was obtained. The second polymeric structure identified as 38159-42 was prepared by the same reaction procedure utilizing morpholine in place of 2-mercaptobenzothiazole. Both structures can be represented conventionally below.

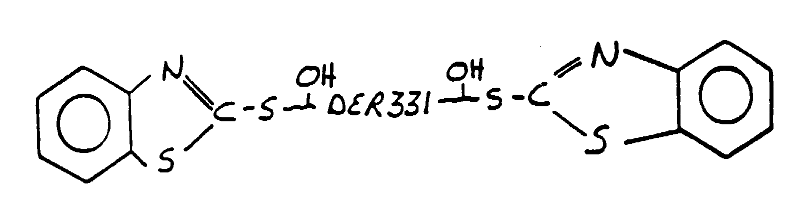

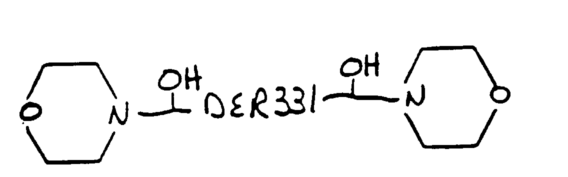

### EXAMPLE 11

Marine coating compositions were formulated with the polymeric and oligomeric anti-fouling modified structures of Examples 2-10, d-trans allethrin, and Kerb 50-W herbicide (Pronamide or 3,5-dichloro-N-(3,3-dimethylpropyne) benzamide, Rohm and Haas Co., Philadelphia, Pa.) Immersion testing was conducted for 0.5 months between late July and early August at Nagasaki Bay, Japan. The fouling ratings are the percentage of coverage with barnacle and tube worm on the panels. The coating composition formulations and anti-fouling performance are set forth below.

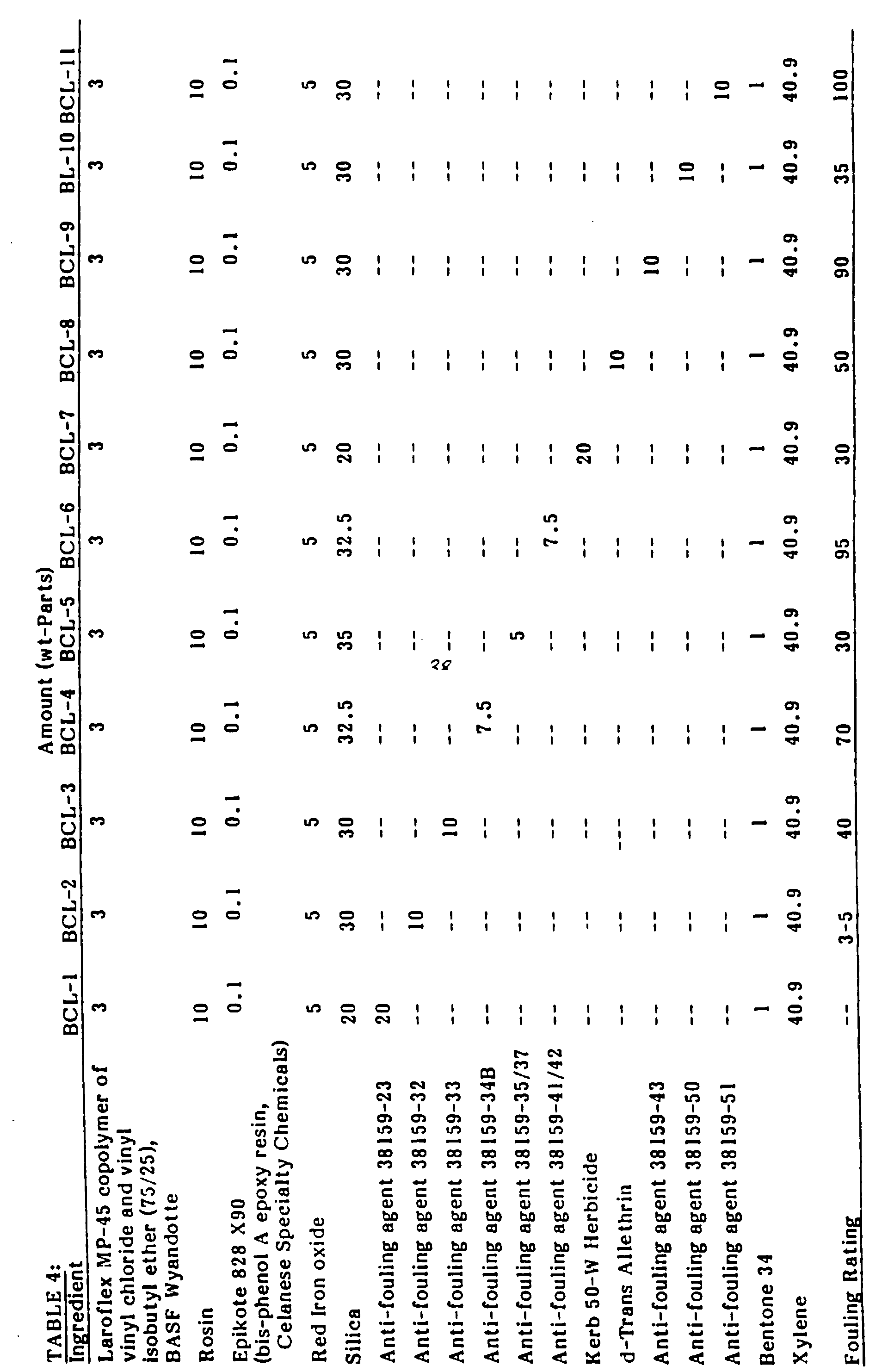

The above-tabulated data shows that samples BCL-2, 3, 5, 8, and 10 provided quite acceptable anti-fouling performance. Samples BCL-4, 9, and 11, however, did not appear to provide acceptable performance, i.e. at least 50% protection to the panel. The negative results for samples BCL-6 and 11 are expected considering the enormous dilution of the anti-fouling agent by virtue of the epoxy compound used in the synthesis of the polymer. The results for BCL-9 were unexpected since only a positional difference of the chlorine atoms exists between the adduct in this sample and sample BCL-3. Based upon sample BCL-3 and the results of Example 12, it is believed that the results for sample BCL-9 comprise anomalous results.

### EXAMPLE 12

Additional marine coating compositions were formulated with the polymeric and oligomeric anti-fouling-modified structures of Examples 2 and 3 as follows:

**TABLE 5**

| Ingredient | Amount (wt-Parts) | |
|---|---|---|
| | BCL-1 | BCL-3 |
| Laroflex MP-45 copolymer of vinyl chloride and vinyl isobutyl ether (75/25), BASF Wyandotte | 3 | 3 |
| Rosin | 10 | 10 |
| Epikote 828 X90 (bis-phenol A epoxy resin, Celanese Specialty Chemicals) | 0.1 | 0.1 |
| Red Iron oxide | 5 | 5 |
| Silica | 20 | 30 |
| Anti-fouling agent 38159-23 | 20 | -- |
| Anti-fouling agent 38159-33 | -- | 10 |
| Bentone 34 | | |
| Xylene | | |

Panels as described in connection with Example 1 were coated with the two formulations and then subjected to Florida immersion testing as described in connection with Example 1 along with the control panel detailed above. The following results were recorded.

**TABLE 6**

| Coating No. | | | | Anti-Fouling Rating Days | | | |
|---|---|---|---|---|---|---|---|
| | 66 | 95 | 122 | 154 | 185 | 215 | 462 |
| Control⁽¹⁾ | 8 | 8 | 8 | 8 | -- | -- | 5⁽²⁾ |
| BCL-1 | 9 | 9 | 8 | 7 | 6 | 6 | 7 |
| BCL-1 | 9 | 9 | 8 | 7 | 6 | 6 | 6 |
| BCL-3 | 8 | 8 | 6 | 7 | 5 | 6 | 5 |
| BCL-3 | 7 | 8 | 7 | 6 | 5 | 5 | 4 |

| | | | | | | | |
|---|---|---|---|---|---|---|---|
| ⁽¹⁾Panel coated with 12% triphenyl tin hydroxide in VAGH vinyl binder of Example 1. | | | | | | | |
| ⁽²⁾Rating for day 399 | | | | | | | |

The above-tabulated results clearly show that the polymeric and oligomeric structures modified with a low toxicity, organic anti-fouling agent displayed quite acceptable anti-fouling properties, even compared to the organo-tin-containing control paint. These results are especially encouraging considering the extended time period involved in the immersion testing. Clearly, the ability to incorporate low toxicity, organic anti-fouling agents into an oligomeric/polymeric structure in marine compositions is demonstrated.

## Claims

1. In a marine anti-fouling composition of a thermoplastic or thermoset binder, solvent, and anti-fouling agent, the improvement wherein said anti-fouling agent comprises a pesticide or herbicide compound having a χ value of between about 0.01 and 0.5, a Z parameter for vinyl or aromatic compounds of between about 0.01 and 0.08, and an LD50 value of greater than 200 mg/kg against rats or mice wherein said anti-fouling agent has been reacted with a coupling agent containing functionality for further reaction to form an oligomer or polymer bearing said anti-fouling agent.

2. The composition of claim 1 wherein the χ value is established by said agent containing heteroatoms selected from sulfur, oxygen, nitrogen, halogen, and mixtures thereof.

3. The composition of claim 1 wherein said anti-fouling agent is selected from heterocyclic compounds, aromatic compounds containing heteroatomic substituents, amino compounds, and carbocyclic ketone vinyl ethers.

4. The composition of claim 3 wherein said aromatic compound with heteroatomic substituents is selected from monoaromatic compounds; fused aromatic rings; and di-aromatic compounds linked with a sigma bond, a dialkylene group, or a divalent heteroatomic group; and mixtures thereof.

5. The composition of claim 1 wherein said anti-fouling agent is selected from :
4-allyl-2-methoxyphenol
diphenylacetonitrile
2,3-dichloro-1,4-napthoquinone
cetylpyridinium chloride
diphenylamine
boric acid
2-chloro-N,N-diallylacetamide
cetyltrimethylammonium bromide
2-isopropylamino-4-chloro-6-ethylamino triazine
dimethoxythiophosphate derivative of diphenyl sulfide
ethyl 4-chloro-alpha(4-chlorophenyl) alpha-hydroxy benzene acetate methyl, diethylamino, dimethoxythiophosphate derivative of pyrimidine
ethoxylated nonylphenol
unsymmetrical hydrazine derivative of succinic acid
allyl, methylhydroxy substituted cyclopentanone ester of dimethylpropenyl cyclopropane carboxylic acid
2,5-dichloro-3-amino benzoic acid
cinnamic acid
2,6-dichloro-4-nitroaniline
dichloro, isopropenyl anilide
dodecylguanidine monoacetate
trichlorophenyl acetic acid
diphenyl ether, chlorophenyl derivative of the isobutyric acid ester of hydroxylacetonitrile
trihydroxybenzoic acid
3-indolacetic acid
3,5-dichloro-N-(3,3-dimethylpropyne)benzamide
dimethylphosphoramide ammonium salt
napthalene acetamide
dimethylethylphenoxy-cyclohexyl-2-propynyl sulfite
o-phenylphenol
phthalic acid
chlorophenyl-isopropyl, propynyl carbamate
N-phenyl,N-butynyl chloroacetamide
amino, chloro, phenyl derivative of azocyclohexamine
N,N-diallyl-2-chloroacetamide
aminoacetic acid derivative of methylphosphonate
3,5-dinitro-4-N,N-dipropylamino benzene sulfonamide
2-chloro-2-propenyl diethylcarbamodithioate
and mixtures thereof.

6. The composition of claim 1 wherein said anti-fouling agent is selected from :
acrolein phenylhydrazone
alkyl dimethyl benzene ammonium saccharinate
2-allyl-4-hydroxy-3-methyl-2-cyclopenten-1-one ester of 2,2-dimethyl-3-(2-methylpropenyl cyclopropanecarboxylic acid)
4-allyl-2-methoxyphenol
o-(allyloxy) phenyl methylcarbamate
2-(allylthio)-2-thiazoline
1,2,3,4,7,7-hexachloro-5,6-bis(chloromethyl)-2-norbornene
4-ethylamino-S-isopropylamino-2-methylthio-1,3,5-triazine
2-amino-3-chloro-1,4-napthoquinone
3-amino-5-nitro-o-toluamide
3-amino-1,2,4-triazole
ammonium sulfamate
antimony potassium tartrate
2-chloro-4-ethylamino-S-isopropylamino-s-triazine
4-chloro-m-chlorocarbanilate
6-chloropiperonyl chrysanthemumate
N-butyl-N-ethyl-α,α,α-trifluoro-2,6-dinitro-p-toluidine
bis (p-chlorophenyl)-3-pyridine methanol
bis (dialkylphosphinothioyl) disulfide
bis (4-hydroxyiminomethyl pyridinum-1-methyl) ether dichloride
2,4-bis (3-methoxypropylamino)-6-methylthio-s-triazine
bis (pentachloro-2,4-cyclopentadien-1-yl)
boric acid
N-(4-bromo-3-chlorophenyl)-N'-methoxy-N'-methyl urea
5-(bromomethyl)-1,2,3,4,7,7-hexachloro-2-norbornene
S-(O,O-diisopropyl phosohoro-dithionate of N-(2-mercaptoethyl) benzenesulfonamide
benzamidooxy-acetic acid
3-benzylideneamino-4-phenylthiazoline-2-thione
bis (p-chlorophenoxy) methane
bis (4-chlorophenyl) disulfide
1,1-bis(p-chlorophenyl)ethane
1,1-bis(p-chlorphenyl)-ethanol
O,O-dimethyl-O-2,5-dichloro-4-bromophenylthionophosphate
O,O-dimethyl-2,2,2-trichloro-1-n-butyryloxyethyl phosphonate
N-butylacetanilide
2-tert-butylamino-4-chloro-6-ethyl amino-s-triazine
2-tert-butylamino-4-ethylamino-6-methylmercapto-s-triazine
4-tert-butyl-2-chlorophenylmethyl methylphosphoramidite
O-(4-tert-butyl-2-chlorophenyl)-O-methyl phosphoramidothionate
butyl 3,4-dihydro-2,2-dimethyl-4-oxo-1,2H-pyran-6-carboxylate
n-butyl-9-hydroxyfluorene-(9)-carboxylate
2-(p-tert-butylphenoxy) cyclohexyl 2-propynyl sulfite
1-butyn-3-yl m-chlorophenyl-carbamate
N-trichloro-methylthio-4-cyclohexene-1,2-dicarboximide
1-napthyl N-methylcarbamate.
S-[[(p-chlorophenyl) thiol] methyl] O,O-diethylphosphorodithioate
2-chloro-N,N-diallyl-acetamide
2-chloroallyl diethyl-dithiocarbamate
cetyldimethylethylammonium bromide
cetyl pyridinium chloride
tetrachloro-p-benzoquinone
2-chloro-4,6-bis(diethylamino)-s-triazine
p-chlorobenzyl p-chlorophenyl sulfide
1,2,3,5,6,7,8,8-octachloro-2,3,3a,4,7,7a-hexahydro-4,7-methanoindene
1-(3-chlorallyl)-3,5,7-triaza-1-azoniaadamantane chloride
ethyl 4,4'-dichlorobenzilate
5-chloro-2-benzothiazolethiol zinc salt
p-chlorobenzyl p-fluorophenyl sulfide
1-chloro-N'-(3,4-dichlorophenyl) N,N-dimethylformamidine
4-chloro-3,5-dimethyl phenoxy-ethanol
1,4-dichloro-2,5-dimethoxybenzene
1-(chloro-2-norbornyl)-3,3-dimethylurea
S-(p-chloro-α-phenylbenzyl) O,O-diethyl phosphorodithioate
p-chlorophenyl ester of benzene-sulfonic acid
N-3-chlorophenyl-1-(isopropyl-carbamoyl-1)-ethyl carbamate
3-(p-chlorophenyl)-5-methyl rhodanine
4 (and 6)-chloro-2-phenylphenol sodium salt
p-chlorophenyl phenyl sulfone
4-chlorophenyl 2,4,5-trichloro-phenylazosulfide
N-(5-chloro-5-thiazolyl) propionamide
2-[(4-chloro-o-tolyl)oxy] propionanilide
2-chloro-1-(2,4,5-trichloro-phenyl) vinyl dimethyl phosphate
N'-(4-chlorophenoxy) phenyl N,N-dimethylurea
isopropyl N-(3-chlorophenyl) carbamate
copper (cupric) oleate
copper 8-quinolinolate
2-(2,4-dihydroxyphenyl)-1-cyclohexene-1-carboxylic acid-lactone O,-Odiethylphosphorothioate
2-chloro-4-dimethylamino-6-methylpyrimidine
3-(2-cyclopenten-1-yl)-2-methyl-4-oxo-2-cyclopenten-1-yl chrysanthemumate
α-cyclohexyl-α-phenyl-3-pyridyl-methanol, hydrochloride
N'-cyclo-octyl-N,N-dimethylurea
3',4'-dichlorocyclopropanecarboxanilide
2,4-dichlorophenoxyacetic acid
2,4-d,α-chlorocrotyl ester
3,5-dimethyl-1,3,5,2H-tetrahydrothiadiazine-2-thione tetra-hydro-3, 5-dimethyl-2H-1,3,5-thiadiazine-2-thione
4-(2,4-dichlorophenoxy) butyric acid
dimethyl 2,3,5,5-tetra-chloroterephthalate
decyltriphenylphosphonium-bromochlorotriphenylstannate
dehydroacetic acid (and its sodium salt)
tris and bis(2,4-dichlorophenoxyethyl) phosphite
2-methyl-thio-4-isopropylamino-6-methylamino-s-triazine
S-2,3-dichloroallyl N,N-diisopropylthiolcarbamate
1,3-diaza-2, 4-cyclopentadiene
N,N-di-n-butyl-p-chlorobenzene-sulfonamide
3,6-dichloro-o-anisic acid
O-(2-chloro-4-nitrophenyl) O,O-dimethyl phosphorothioate
2,6-dichlorobenzonitrile
2,3-dichloro-1, 4-naphthoquinone
1,3-bis(1-hydroxy-2,2,2-trichloroethyl) urea
3,4-dichlorobenzyl methylcarbamate (80%) mixture with 2,3-dichlorobenzyl methylcarbamate (20%)
1,1-dichloro-2,2-bis(p-ethylphenyl)ethane
2,4-dichloro-6-(o-chloro-anilino)-s-triazine
N-(dichlorofluoromethylthio)-N,N'-dimethyl-N-phenyl sulfamide
4,4'-dichloro-N-methylbenzene-sulfoanilide
2,3-dichloro-2-methylpropionic acid sodium salt
2,6-dichloro-4-nitroaniline
2,5-dichloro-3-nitrobenzoic acid
5,2'-dichloro-4'-nitro-salicylanilide ethanolamine salt
2',5'-dichloro-4'-nitrososalicylanilide
2,2'-dihydroxy-5,5'-dichlorophenylmethane
1-(2,4-dichlorophenoxyacetyl)-3,5-dimethyl pyrazole
N-3,4-dichlorophenyl N'-5-chloro-2-(2-sodium sulfonyl-4-chlorophenoxy) phenyl urea
2,4-dichlorophenyl ester of benzene sulfonic acid
2,4-dichlorophenyl methanesulfonate
2,4-dichlorophenyl 4-nitrophenyl ether
4-dichlorotetrahydrothiophene 1,1-dioxide
4,4'-dichloro-alpha-trichloromethylbenzhydrol
3',4'-dichloro-2-methacrylanilide
α(Diethoxyphosphinothioylthio) gamma-butyrolactone
O,O-diethyl S-carboethoxymethyl phosphorothioate
O,O-diethyl O-naphthylamido phosphorothioate
O,O-diethyl O-3,5,6-trichloro-2-pyridyl phosphorothioate
2,2'-dihydroxy-3,5,3',5',4"-pentachlorotriphenylmethane 2"-sodium sulfonate
O,O-diisopropyl S-diethyldithiocarbamoyl phosphorodithioate
2,4-dimethylbenzyl 2,2-dimethyl-3-(2-methylpropenyl) cyclopropanecarboxylate
O,O-dimethyl-S-2-(acetylamino)-ethyl dithiophosphate
N-dimethylamino succinamic acid
1,1-dimethyl-3-[3-(N-tert-butyl-carbamoyloxy)phenyl]urea
O,O-dimethyl S-carboethoxymethyl phosphorothioate
O,O-dimethyl O-(3-chloro-4-nitrophenyl) phosphorothioate
O,O-dimethyl O-p-cyanophenyl phosphorothioate
O,O-dimethyl-S-[5-ethoxy-1,3,4-thiadiazol-2(3H)-onyl-(3)-methyl] phosphorodithioate
N,N-dimethyl-N'-(2-methyl-4-chlorophenyl)-formamidine hydrochloride
O,O-dimethyl O-(4-nitro-m-tolyl) phosphorothioate
O,S-dimethyl tetrachloro thioterephthalate
4'-dimethyltriazenoacetanilide
dinitrocyclohexylphenol
2,4'-dinitro-4-trifluoromethyl diphenylether
2-(1-methyl-n-heptyl)-4,6-dinitrophenyl crotonate
N,N-dimethyl-2,2-diphenylacetamide
diphenylacetonitrile
diphenylamine
2,6-dinitro-N,N-di-n-propyl-p-toluidine
di-n-propyl-2,5-pyridine-dicarboxylate
1,1'-ethylene-2,2'-dipyridinium dibromide
2,3-dicyano-1,4-dithia-anthraquinone
3-(3,4-dichlorphenyl)-1,1-dimethyl-urea
n-dodecyl thiocyanate
n-dodecylguanidine acetate
ethyl N,N-dipropylthiolcarbamate
2-(2,4,5-trichlorophenoxy)ethyl-2,2-dichloropropionate
ethoxymethylbis (p-chlorophenyl) carbinol
1,2-dihydro-6-ethoxy-2,2,4-trimethylquinone
ethyl-N,N-diisobutyl thiolcarbamate
ethylenebis (dithiocarbamato) zinc
3-phenyl-1,1-dimethylurea trichloroacetate
ferric dimethyl-dithiocarbamate
O,O-dimethyl S-(N-formyl-N-methylcarbamoyl-methyl)phosphorodithioate
2-formyl-4-chlorophenoxyacetic acid
3-furfuryl-2-methyl-4-oxo-2-cyclopenten-1-yl chrysanthemumate
2-heptadecyl-2-imidazoline
7-chloro-4,6-dimethoxycoumaran-3-one-2-spiro-1'-(2'-methoxy-6'-methylcyclohex-2'-en-4'-one)
1,1,1,3,3,3,-hexachloro-2-propanone
1,5a,6,9,9a,9b-hexahydro-4a(4H)-dibenzofuran-carboxaldehyde
9-(p-n-hexyloxyphenyl)-10-methyl-acridinium chloride
2-hydroxymethyl-4-chloro-phenoxyacetic acid
N-hydroxy-methyl-2,6-dichlorothiobenzamide
Isopropyl N-phenylcarbamate
isobornyl thiocyanoacetate
isobutyl triphenylmethylamine
5-bromo-3-isopropyl-6-methyluracil
isopropyl-4,4'-diboromobenzilate
isopropyl 4,4'-dichlorobenzilate
isopropyl mercaptophenyl-acetate, O,O-dimethyl phosphorodithioate
3-cyclohexyl-6,7-dihydro-1H-cyclopentapyrimidine-2,4(3H,5H)-dione
3-(3,4-dichlorophenyl)-1-methoxy-1-methylurea
S-[1,2-bis(ethoxy-carbonyl)ethyl] O,O-dimethyl phosphorodithioate
manganese ethylenebisdithiocarbamate
4-chloro-2-methylphenoxyacetic acid
2-(4-chloro-2-methylphenoxy) propionic acid
see-butyl 4(or 5)-chloro-2-methylcyclohexanecarboxylate
S-[(4,6-diamino-s-triazine-2-yl)methyl] O,O-dimethyl phosphorodithioate
2-isopropylamino-4-(3-methoxypropylamino)-6-methylthio-s-triazine
1,1,1-trichloro-2,2-bis(p-methoxyphenyl) ethane
2-methoxy-4-isopropylamino-6-diethylamino-s-triazine
S-(N-methoxymethylcarbamoylmethyl) dimethyl phosphorothiolothiononate
alpha-methylbenzyl 3-(dimethoxy-phosphinyloxy)-cis-crotonate
m-(1-methyl butyl) phenyl methyl-carbamate
methyl-2-chloro-9-hydroxyfluorene-(9)-carboxylate
3,3'-methylenebis (4-hydroxycoumarin)
2,2'-methylenebis (3,4,6-trichlorophenol)
6-methyl-2-oxo-1,3-dithio(4,5-b)quinoxaline
O,O-dimethyl S-(2,5-dichlorophenyl-thio)-methyl phosphorodithioate
3(2-methylpiperidino)propyl-3,4-dichlorobenzoate
4-(methylsulfonyl)-2,6-dinitro-N,N-dipropylaniline
methyl-2,3,5,6-tetrachloro-N-methoxy-N-methylterephthalamate
O-methyl O-(2,4,5-trichloro-phenyl) amidophosphorothionate
3-(p-bromophenyl)-1-methyl-1-methoxyurea
1,2-dihydropyridazine-3,6-dione
3,3'-ethylenebis-(tetrahydro-4,6-dimethyl-2H-1,3,5-thiadiazone-2-thione)
S-ethyl hexahydro-1H-azepine-1-carbothioate
3-(p-chlorphenyl)-1,1-dimethylurea
3-(p-chlorophenyl)-1,1-dimethylurea trichloroacetate
disodium ethylene bisdithiocarbamate
1,2-dibromo-2,2-dichloroethyl dimethyl phosphate
beta-naphthoxyacetic acid
3-(3,4-dichlorophenyl)-1-methyl-1-n-butylurea
3-(hexahydro-4,7-methanoindan-5-yl)-1,1-dimethylurea
N-1-naphthyl-phthalamic acid
p-chlorophenyl p-phenyl 4-chlorobenzenesulfonate
S-propylbutyl-ethylthiocarbamate
phenothiazine
ethyl mercapto-phenylacetate O,O-dimethyl-phosphorodithioate
N-phenyl-1-(ethylcarbamoyl-1) ethylcarbamate (d isomer)
phosphoric acid 2-chloro-1-(2,4,5-trichlorophenyl)vinyl dimethyl ester
4-amino-3,5,6-trichloropicolinic acid
piperonyl-bis(2-[2'-n-butoxyethoxylethyl)acetal
piperonyl butoxide alpha[2-(2-n-butoxyethoxy)-ethoxy] 4,5-methylenedioxy2-propyltoluene
piperonyl cyclonene
polychlorobenzoic acid, dimethylamine salt
2,4-bis-(isopropylamino)-6-methoxy-s-triazine
2-methyl-mercapto-4,6-bis(isopropylamino)-s-triazine
2-chloro-N-isopropylacetanilide
3',4'-dichloropropionalide
2-chloro-4,6-bis(isopropyl-amino)-s-triazine
di-n-propyl-3-methyl-6,7-methylenedioxy-1,2,3,4-tetra-hydronaphthalene-1,2-dicarboxylate
5-amino-4-chloro-2-phenyl-3(2H) pyridazinone
pyrethrin I
8-quinolinol
dimethyl 2,4,5-trichlorophenyl phosphorothionate
salicylanilide
1-(3,4-methylene-dioxyphenoxy)-3,6,9-trioxoundecane
sodium 2-(2,4-dichlorophenoxy)ethyl sulfate
1-(2-methyl-cyclohexyl)-3-phenylurea
1-(2,4,5-trichlorophenoxy) propionic acid
N'-chlor-2-methyl-p-valerotoluidine
1,2-methylenedioxy-4-[2-(octylsulfinyl)propyl] benzene
methyl 3,4-dichlorocarbanilate
2,4,5-trichlorophenoxyacetic acid
trichlorobenzyl chloride
2,2-bis(p-chlorophenyl)-1,1-dichloroethane
ethylene-1,2-bis (thiocarbamoyldimethylthio-carbamoyldisulfide)
3-tert-butyl-5-chloro-6-methyluracil
2,6-di-tert-butyl-p-tolylmethylcarbamate
2,3,6,7-tetrachloro-4a,8a-epoxy-1,2,3,4,4a,8a-hexahydro-1,4-methanonaphthalene-5,8-dione
N-(1,1,2,2-tetrachloro-ethyl-sulfenyl)-cis-α-4-cyclohexene-1,2-dicarboximide
2,4,5,6-tetrachloroiso-phthalonitrile
1,2,4,5-tetrachloro-3-nitrobenzene
p-chlorophenyl 2,4,5-trichlorophenyl sulfone
5,6,7,8-tetrahydro-1-naphthyl methylcarbamate
3,4,5,6-tetrahydrophthalimidomethyl 2,2-dimethyl-3-(2-methylpropenyl) cyclopropanecarboxylate
O,O,O',O'-tetramethyl O,O'-thiodi-p-phenylene phosphorothioate
1,3,6,8-tetranitrocarbazole
2-(4-thiazolyl) benzimidazole
2,2'-thiobis(4,6-dichlorophenol)
2-thiocyanoethyl dodecanoate
2,3-quinoxaline-dithiol cyclic trithiocarbonate
tetramethylthiuram disulfide
N-meta-tolyl phthalamic acid
S-2,3,3-trichloroallyl N,N-di-isopropyl-thiolcarbamate
O,O-dimethyl (1-hydroxy-2,2,2-trichloroethyl)phosphonate
2,3,6-trichlorobenzoic acid
trichlorobenzoic acid, dimethylamine salt
4,5,7-trichlorobenzthiadiazole-2,1,3
2,3,6-trichlorobenzyloxypropanol
N-trichloromethylthio-benzothiazolone
N-trichloromethylthiobenzoxazolone
2,2,2-trichloro-N-(pentachloro-phenyl)acetimidoyl chloride
2-(2,4,5-trichlorophenoxy)ethyl sulfate, sodium salt
N,N',N"-trichloro-2,4,6-triamine-1,3,5-triazine
2-chloro-4-(di-ethylamino)-6-(ethylamino)-s-triazine
tert-butyl 4(or 5)-chloro-2-methylcyclohexanecarboxylate
S-propyldipropylthiocarbamate
zinc ethylene bisdithiocarbamate
zinc dimethyldithiocarbamate
3,5-dinitro-o-toluamide
and mixtures thereof.

7. The composition of any one of claims 1 to 6 wherein said coupling agent has a molecular weight of less than about 300.

8. The composition of any one of claims 1 to 7 wherein said coupling agent contains heteroatomic substituents selected from nitrogen, sulfur, or both.

9. The composition of any one of claims 1 to 8 which comprises a film-forming coating composition.

10. The composition of any one of claims 1 to 9 wherein said anti-fouling agent is chemically or physically incorporated into cementitious surfaces.

## Patentansprüche

1. Verbesserung einer Marine-Antifoulingzusammensetzung aus einem thermoplastischen oder hitzehärtbaren Bindemittel, Lösungsmittel und Antifoulingmittel, wobei das Antifoulingmittel eine Pestizid- oder Herbizidverbindung mit einem χ-Wert zwischen etwa 0,01 und 0,5, einem Z-Parameter für Vinylverbindungen oder aromatische Verbindungen zwischen etwa 0,01 und 0,08 und einem größeren LD50-Wert als 200 mg/kg gegenüber Ratten oder Mäusen umfaßt, wobei das Antifoulingmittel mit einem Kopplungsmittel umgesetzt wurde, das eine Funktionalität zur weiteren Umsetzung enthält, wobei ein Oligomer oder Polymer gebildet wird, das das Antifoulingmittel trägt.

2. Zusammensetzung nach Anspruch 1, wobei der χ-Wert durch das Mittel festgelegt ist, das aus Schwefel-, Sauerstoff-, Stickstoff-, Halogenatomen und Gemischen davon ausgewählte Heteroatome enthält.

3. Zusammensetzung nach Anspruch 1, wobei das Antifoulingmittel aus heterocyclischen Verbindungen, aromatischen Verbindungen, die heteroatomare Substituenten enthalten, Aminoverbindungen und carbocyclischen Ketonvinylethem ausgewählt ist.

4. Zusammensetzung nach Anspruch 3, wobei die aromatische Verbindung mit den heteroatomaren Substituenten aus monoaromatischen Verbindungen, kondensierten aromatischen Ringen und diaromatischen Verbindungen, die durch eine σ-Bindung, einen Dialkylenrest oder einen zweiwertigen heteroatomaren Rest verknüpft sind, und Gemischen davon ausgewählt ist.

5. Zusammensetzung nach Anspruch 1, wobei das Antifoulingmittel ausgewählt ist aus:
4-Allyl-2-methoxyphenol
Diphenylacetonitril
2,3-Dichlor-1,4-naphthochinon
Cetylpyridiniumchlorid
Diphenylamin
Borsäure
2-Chlor-N,N-diallylacetamid
Cetyltrimethylammoniumbromid
2-Isopropylamino-4-chlor-6-ethylaminotriazin
Dimethoxythiophosphatderivat des Diphenylsulfids
Ethyl-4-chlor-α-(4-chlorphenyl)-α-hydroxybenzolacetat
Methyldiethylaminodimethoxythiophosphatderivat des Pyrimidins
Ethoxyliertes Nonylphenol
Unsymmetrisches Hydrazinderivat der Bernsteinsäure
Allylmethylhydroxy-substituierter Cyclopentanonester der Dimethylpropenylcyclopropancarbonsäure
2,5-Dichlor-3-aminobenzoesäure
Zimtsäure
2,6-Dichlor-4-nitroanilin
Dichlorisopropenylanilid
Dodecylguanidinmonoacetat
Trichlorphenylessigsäure
Diphenyletherchlorphenylderivat des Isobuttersäureesters des Hydroxyacetonitrils
Trihydroxybenzoesäure
3-Indolessigsäure
3,5-Dichlor-N-(3,3-dimethylpropin)benzamid
Dimethylphosphoramidammoniumsalz
Naphthalinacetamid
Dimethylethylphenoxycyclohexyl-2-propinylsulfit
o-Phenylphenol
Phthalsäure
Chlorphenylisopropylpropinylcarbamat
N-Phenyl-N-butinylchloracetamid
Aminochlorphenylderivat des Azocyclohexamins
N,N-Diallyl-2-chloracetamid
Aminoessigsäurederivat des Methylphosphonats
3,5-Dinitro-4-N,N-dipropylaminobenzolsulfonamid
2-Chlor-2-propenyldiethylcarbamodithioat
und Gemischen davon.

6. Zusammensetzung nach Anspruch 1, wobei das Antifoulingmittel ausgewählt ist aus:
Acroleinphenylhydrazon
Alkyldimethylbenzolammoniumsaccharinat
2-Allyl-4-hydroxy-3-methyl-2-cyclopenten-1-onester der 2,2-Dimethyl-3-(2-methylpropenylcyclopropancarbonsäure)
4-Allyl-2-methoxyphenol
o-(Allyloxy)phenylmethylcarbamat
2-(Allylthio)-2-thiazolin
1,2,3,4,7,7-Hexachlor-5,6-bis(chlormethyl)-2-norbornen
4-Ethylamino-6-isopropylamino-2-methylthio-1,3,5-triazin
2-Amino-3-chlor-1,4-naphthochinon
3-Amino-5-nitro-o-toluamid
3-Amino-1,2,4-triazol
Ammoniumsulfamat
Antimonkaliumtartrat
2-Chlor-4-ethylamino-6-isopropylamino-s-triazin
4-Chlor-m-chlorcarbanilat
6-Chlorpiperonylchrysanthemumat
N-Butyl-N-ethyl-α,α,α-trifluor-2,6-dinitro-p-toluidin
bis-(p-Chlorphenyl)-3-pyridinmethanol
bis-(Dialkylphosphinothioyl)disulfid
bis-(4-Hydroxyiminomethylpyridinium-1-methyl)etherdichlorid
2 ,4-bis-(3 -Methoxypropylamino)-6-methylthio-s-triazin
bis-(Pentachlor-2,4-cyclopentadien-1-yl)
Borsäure
N-(4-Brom-3 -chlorphenyl)-N'-methoxy-N'-methylharnstoff
5-(Brommethyl)-1,2,3,4,7,7-hexachlor-2-norbornen
S-(O,O-Diisopropylphosphoro)dithionsäureester des N-(2-Mercaptoethyl)benzolsulfonamids Benzamidooxyessigsäure
3 -Benzylidenamino-4-phenylthiazolin-2-thion
bis-(p-Chlorphenoxy)methan
bis-(4-Chlorphenyl)disulfid
1,1-bis-(p-Chlorphenyl)ethan
1,1-bis-(p-Chlorphenyl)ethanol
O,O-Dimethyl-O-2,5-dichlor-4-bromphenylthionophosphat
O,O-Dimethyl-2,2,2-trichlor-1-n-butyryloxyethylphosphonat
N-Butylacetanilid
2-tert.-Butylamino-4-chlor-6-ethylamino-s-triazin
2-tert.-Butylamino-4-ethylamino-6-methylmercapto-s-triazin
4-tert.-Butyl-2-chlorphenylmethylmethylphosphoramidit
O-(4-tert.-Butyl-2-chlorphenyl)-O-methylphosphoramidothionat
Butyl-3,4-dihydro-2,2-dimethyl-4-oxo-1,2H-pyran-6-carboxylat
n-Butyl-9-hydroxyfluoren-(9)-carboxylat
2-(p-tert.-Butylphenoxy)cyclohexyl-2-propinylsulfit
1-Butin-3-yl-m-chlorphenylcarbamat
N-Trichlormethylthio-4-cyclohexen-1,2-dicarboximid
1-Naphthyl-N-methylcarbamat
S-[[(p-Chlorphenyl)thiol]methyl]-O,O-diethylphosphorodithioat
2-Chlor-N,N-diallylacetamid
2-Chlorallyldiethyldithiocarbamat
Cetyldimethylethylammoniumbromid
Cetylpyridiniumchlorid
Tetrachlor-p-benzochinon
2-Chlor-4,6-bis(diethylamino)-s-triazin
p-Chlorbenzyl-p-chlorphenylsulfid
1,2,3,5,6,7,8,8-Octachlor-2,3,3a,4,7,7a-hexahydro-4,7-methanoinden
1-(3-Chlorallyl)-3,5,7-triaza-1-azoniaadamantanchlorid
Ethyl-4,4'-dichlorbenzilat
Zinksalz des 5-Chlor-2-benzothiazolthiols
p-Chlorbenzyl-p-fluorphenylsulfid
1-Chlor-N'-(3 ,4-dichlorphenyl)-N,N-dimethylformamidin
4-Chlor-3,5-dimethylphenoxyethanol
1,4-Dichlor-2,5-dimethoxybenzol
1-(Chlor-2-norbomyl)-3,3-dimethylharnstoff
S-(p-Chlor-α-phenylbenzyl)-O,O-diethylphosphorodithioat
p-Chlorphenylester der Benzolsulfonsäure
N-3-Chlorphenyl-1(isopropylcarbamoyl-1)-ethylcarbamat
3-(p-Chlorphenyl)-5-methylrhodanin
Natriumsalz des 4- (und 6-)Chlor-2-phenylphenols
p-Chlorphenylphenylsulfon
4-Chlorphenyl-2,4,5-trichlorphenylazosulfid
N-(5-Chlor-5-thiazolyl)propionamid
2-[(4-Chlor-o-tolyl)oxy]propionanilid
2-Chlor-1-(2,4,5-trichlorphenyl)vinyldimethylphosphat
N'-(4-Chlorphenoxy)phenyl-N,N-dimethylharnstoff
Isopropyl-N-(3 -chlorphenyl)carbamat
Kupfer-(Kupfer-II)-oleat
Kupfer-8-chinolinolat
2-(2,4-Dihydroxyphenyl)-1-cyclohexen-1-carbonsäurelacton-O'O-diethylphosphorothioat
2-Chlor-4-dimethylamino-6-methylpyrimidin
3-(2-Cyclopenten-1-yl)-2-methyl-4-oxo-2-cyclopenten-1-yl-chrysanthemumat
α-Cyclohexyl-α-phenyl-3-pyridylmethanolhydrochlorid
N'-Cyclooctyl-N,N-dimethylharnstoff
3',4'-Dichlorcyclopropancarboxanilid
2,4-Dichlorphenoxyessigsäure
2,4-d,α-Chlorcrotylester
3,5-Dimethyl-1,3,5,2H-tetrahydrothiadiazin-2-thiontetrahydro-3,5-dimethyl-2H-1,3,5-thiadiazin-2-thion
4-(2,4-Dichlorphenoxy)buttersäure
Dimethyl-2,3,5,6-tetrachlorterephthalat
Decyltriphenylphosphoniumbromchlortriphenylstannat
Dehydroessigsäure (und ihr Natriumsalz)
tris- und bis-(2,4-Dichlorphenoxyethyl)phosphit
2-Methylthio-4-isopropylamino-6-methylamino-s-triazin
S-2,3-Dichlorallyl-N,N-diisopropylthiolcarbamat
1,3-Diaza-2,4-cyclopentadien
N,N-Di-n-butyl-p-chlorbenzolsulfonamid
3,6-Dichlor-o-anissäure
O-(2-Chlor-4-nitrophenyl)-O,O-dimethylphosphorothioat
2,6-Dichlorbenzonitril
2,3-Dichlor-1,4-naphthochinon
1,3- bis-(1-Hydroxy-2,2,2-trichlorethyl)harnstoff
Gemisch aus 3,4-Dichlorbenzylmethylcarbamat (80 %) und 2,3-Dichlorbenzylmethylcarbamat (20 %)
1,1-Dichlor-2,2-bis(p-ethylphenyl)ethan
2,4-Dichlor-6-(o-chloranilino)-s-triazin
N-(Dichlorfluormethylthio)-N',N'-dimethyl-N-phenylsulfamid
4,4'-Dichlor-N-methylbenzolsulfoanilid
Natriumsalz der 2,3-Dichlor-2-methylpropionsäure
2,6-Dichlor-4-nitroanilin
2,5-Dichlor-3-nitrobenzoesäure
5,2'-Dichlor-4'-nitrosalicylanilidethanolaminsalz
2',5'-Dichlor-4'-nitrososalicylanilid
2,2'-Dihydroxy-5,5'-dichlorphenylmethan
1-(2,4-Dichlorphenoxyacetyl)-3,5-dimethylpyrazol
N-3,4-Dichlorphenyl-N'-5-chlor-2,(2-natnumsulfonyl-4-chlorphenoxy)phenylhamstoff
2,4-Dichlorphenylester der Benzolsulfonsäure
2,4-Dichlorphenylmethansulfonat
2,4-Dichlorphenyl-4-nitrophenylether
4-Dichlortetrahydrothiophen-1,1-dioxid
4,4'-Dichlor-α-trichlormethylbenzhydrol
3',4'-Dichlor-2-methacrylanilid
α-(Diethoxyphosphinothioylthio)-γ-butyrolacton
O,O-Diethyl-S-carboethoxymethylphosphorothioat
O,O-Diethyl-O-naphthylamidophosphorothioat
O,O-Diethyl-O-3,5,6-trichlor-2-pyridylphosphorothioat
2,2'-Dihydroxy-3,5,3",5',4"-pentachlortriphenylmethan-2"-natriurnsulfonat
O,O-Diisopropyl-S-diethyldithiocarbamoylphosphorodithioat
2,4-Dimethylbenzyl-2,2-dimethyl-3-(2-methylpropenyl)cyclopropancarboxylat
O,O-Dimethyl-S-2-(acetylamino)ethyldithiophosphat
N-Dimethylaminosuccinamsäure
1,1-Dimethyl-3-[3-(N-tert.-butylcarbamoyloxy)phenyl]harnstoff
O,O-Dimethyl-S-carboethoxymethylphosphorothioat
O,O-Dimethyl-O-(3 -chlor-4-nitrophenyl)phosphorothioat
O,O-Dimethyl-O-p-cyanophenylphosphorothioat
O,O-Dimethyl-S-[5-ethoxy-1,3,4-thiadiazol-2(3H)-onyl-(3)-methyl]phosphorodithioat
N,N-Dimethyl-N'-(2-methyl-4-chlorphenyl)formamidinhydrochlorid
O,O-Dimethyl-O-(4-nitro-m-tolyl)phosphorothioat
O,S-Dimethyltetrachlorthioterephthalat
4'-Dimethyltriazenoacetanilid
Dinitrocyclohexylphenol
2,4'-Dinitro-4-trifluormethyldiphenylether
2-(1-Methyl-n-heptyl)-4,6-dinitrophenylcrotonat
N,N-Dimethyl-2,2-diphenylacetamid
Diphenylacetonitril
Diphenylamin
2,6-Dinitro-N,N-di-n-propyl-p-toluidin
Di-n-propyl-2,5-pyridindicarboxylat
1,1'-Ethylen-2,2'-dipyridiniumdibromid
2,3-Dicyano-1,4-dithiaanthrachinon
3-(3,4-Dichlorphenyl)-1,1-dimethylharnstoff
n-Dodecylthiocyanat
n-Dodecylguanidinacetat
Ethyl-N,N-dipropylthiolcarbamat
2-(2,4,5-Trichlorphenoxy)ethyl-2,2-dichlorpropionat
Ethoxymethylbis-(p-chlorphenyl)carbinol
1,2-Dihydro-6-ethoxy-2,2,4-trimethylchinon
Ethyl-N,N-diisobutylthiolcarbamat
Ethylenbis(dithiocarbamato)zink
3-Phenyl-1,1-dimethylhamstofftrichloracetat
Eisen-III-dimethyldithiocarbamat
O,O-Dimethyl-S-(N-formyl-N-methylcarbamoylmethyl)phosphorodithioat
2-Formyl-4-chlorphenoxyessigsäure
3 -Furfuryl-2-methyl-4-oxo-2-cyclopenten-1-ylchrysanthemumat
2-Heptadecyl-2-imidazolin
7-Chlor-4,6-dimethoxycoumaran-3-on-2-spiro-1'-(2'-methoxy-6'-methylcyclohex-2'-en-4'-on)
1,1,1,3,3,3-Hexachlor-2-propanon
1,5a,6,9,9a,9b-Hexahydro-4a(4H)-dibenzofurancarbonsäurealdehyd
9-(p-n-Hexyloxyphenyl)-10-methylacridiniumchlorid
2-Hydroxymethyl-4-chlorphenoxyessigsäure
N-Hydroxymethyl-2,6-dichlorthiobenzamid
Isopropyl-N-phenylcarbamat
Isobomylthiocyanoacetat
Isobutyltriphenylmethylamin
5-Brom-3-isopropyl-6-methyluracil
Isopropyl-4,4'-dibrombenzilat
Isopropyl-4,4'-dichlorbenzilat
Isopropylmercaptophenylacetat-O,O-dimethylphosphorodithioat
3-Cyclohexyl-6,7-dihydro-1H-cyclopentapyrimidin-2,4(3H,5H)-dion
3-(3,4-Dichlorphenyl)-1-methoxy-1-methylharnstoff
S-[1,2-bis(Ethoxycarbonyl)ethyl]-O,O-dimethylphosphorodithioat
Manganethylenbisdithiocarbamat
4-Chlor-2-methylphenoxyessigsäure
2-(4-Chlor-2-methylphenoxy)propionsäure
sek.-Butyl-4-(oder 5-)chlor-2-methylcyclohexancarboxylat
S-[(4,6-Diamino-5-triazin-2-yl)methyl]-O,O-dimethylphosphorodithioat
2-Isopropylamino-4-(3-methoxypropylamino)-6-methylthio-s-triazin
1,1,1-Trichlor-2,2-bis-(p-methoxyphenyl)ethan
2-Methoxy-4-isopropylamino-6-diethylamino-s-triazin
S-(N-Methoxymethylcarbamoylmethyl)dimethylphosphorothiolothiononat
α-Methylbenzyl-3-(dimethoxyphosphinyloxy)-cis-crotonat
m-(1-Methylbutyl)phenylmethylcarbamat
Methyl-2-chlor-9-hydroxyfluoren-(9)-carboxylat
3,3'-Methylenbis-(4-hydroxycoumarin)
2,2'-Methylenbis-(3 ,4,6-trichlorphenol)
6-Methyl-2-oxo-1,3-dithio-(4,5b)-chinoxalin
O,O-Dimethyl-S-(2,5-dichlorphenylthio)methylphosphorodithioat
3-(2-Methylpiperidino)propyl-3,4-dichlorbenzoat
4-(Methylsulfonyl)-2,6-dinitro-N,N-dipropylanilin
Methyl-2,3,5,6-tetrachlor-N-methoxy-N-methylterephthalamat
O-Methyl-O-(2,4,5-trichlorphenyl)amidophosphorothionat
3-(p-Bromphenyl)-1-methyl-1-methoxyharnstoff
1,2-Dihydropyridazin-3,6-dion
3,3'-Ethylenbis(tetrahydro-4,6-dimethyl-1,3,5-thiadiazon-2-thion)
S-Ethylhexahydro-1H-azepin-1-carbothioat
3-(p-Chlorphenyl)-1,1-dimethylharnstoff
3-(p-Chlorphenyl)-1,1-dimethylharnstoffirichloracetat
Dinatriumethylenbisdithiocarbamat
1,2-Dibrom-2,2-dichlorethyldimethylphosphat
β-Naphthoxyessigsäure
3-(3,4-Dichlorphenyl)-1-methyl-1-n-butylharnstoff
3-(Hexahydro-4,7-methanoindan-5-yl)-1,1-dimethylharnstoff
N-1-Naphthylphthalamsäure
p-Chlorphenyl-p-phenyl-4-chlorbenzolsulfonat
S-Propylbutylethylthiocarbamat
Phenothiazin
Ethylmercaptophenylacetat-O,O-dimethylphosphorodithioat
N-Phenyl-1-(ethylcarbamoyl-1)-ethylcarbamat (d-Isomer)
Phosphorsäure-2-chlor-1-(2,4,5-trichlorphenyl)vinyldimethylester
4-Amino-3,5,6-trichlorpicolinsäure
Piperonylbis-(2-[2'-n-butoxyethoxy]ethyl)acetal
Piperonylbutoxid-α-[2-(2-n-butoxyethoxy)ethoxy]-4,5-methylendioxy-2-propyltoluol
Piperonylcyclonen
Dimethylaminsalz der Polychlorbenzoesäure
2,4-bis-(Isopropylamino)-6-methoxy-s-triazin
2-Methylmercapto-4,6-bis(isopropylamino) -S-triazin
2-Chlor-N-isopropylacetanilid
3',4'-Dichlorpropionalid
2-Chlor-4,6-bis(isopropylamino)-S-triazin
Di-n-propyl-3-methyl-6,7-methylendioxy-1,2,3,4-tetrahydronaphthalin-1,2-dicarboxylat
5-Amino-4-chlor-2-phenyl-3(2H)-pyridazinon
Pyrethrin I
8-Chinolinol
Dimethyl-2,4,5-trichlorphenylphosphorothionat
Salicylanilid
1-(3,4-Methylendioxyphenoxy)-3,6,9-trioxoundecan
Natrium-2-(2,4-dichlorphenoxy)ethylsulfat
1-(2-Methylcyclohexyl)-3-phenylharnstoff
1-(2,4,5-Trichlorphenoxy)propionsäure
N'-Chlor-2-methyl-p-valerotoluidin
1,2-Methylendioxy-4-[2-(octylsulfinyl)propyl]benzol
Methyl-3,4-dichlorcarbanilat
2,4,5-Trichlorphenoxyessigsäure
Trichlorbenzylchlorid
2,2-bis-(p-Chlorphenyl)-1,1-dichlorethan
Ethylen-1,2-bis(thiocarbamoyldimethylthiocarbamoyldisulfid)
3-tert.-Butyl-5-chlor-6-methyluracil
2,6-Di-tert.-butyl-p-tolylmethylcarbamat
2,3,6,7-Tetrachlor-4a,8a-epoxy-1,2,3,4,4a,8a-hexahydro-1,4-methanonaphthalin-5,8-dion
N-(1,1,2,2-Tetrachlorethylsulfenyl)-cis-α-4-cyclohexen-1,2-dicarboximid
2,4,5,6-Tetrachlorisophthalonitril
1,2,4,5-Tetrachlor-3-nitrobenzol
p-Chlorphenyl-2,4,5-trichlorphenylsulfon
5,6,7,8-Tetrahydro-1-naphthylmethylcarbamat
3,4,5,6-Tetrahydrophthalimidomethyl-2,2-dimethyl-3-(2-methylpropenyl)cyclopropancarboxylat
O,O,O',O'-Tetramethyl-O,O'-thiodi-p-phenylenphosphorothioat
1,3,6,8-Tetranitrocarbazol
2-(4-Thiazolyl)benzimidazol
2,2'-Thiobis-(4,6-dichlorphenol)
2-Thiocyanoethyldodecanoat
2,3-Chinoxalindithiol-cyclisches-trithiocarbonat
Tetramethylthiuramdisulfid
N-m-Tolylphthalamsäure
S-2,3,3-Trichlorallyl-N,N-diisopropylthiolcarbamat
O,O-Dimethyl-(1-hydroxy-2,2,2-trichlorethyl)phosphonat
2,3,6-Trichlorbenzoesäure
Dimethylaminsalz der Trichlorbenzoesäure
4,5,7-Trichlorbenzthiadiazol-2,1,3
2,3,6-Trichlorbenzyloxypropanol
N-Trichlormethylthiobenzothiazolon
N-Trichlormethylthiobenzoxazolon
2,2,2-Trichlor-N-(pentachlorphenyl)acetimidoylchlorid
Natriumsalz des 2-(2,4,5-Trichlorphenoxy)ethylsulfats
N,N',N"-Trichlor-2,4,6-triamin-1,3,5-triazin
2-Chlor-4-(diethylamino)-6-(ethylamino)-s-triazin
tert.-Butyl-4-(oder 5-)chlor-2-methylcyclohexancarboxylat
S-Propyldipropylthiocarbamat
Zinkethylenbisdithiocarbamat
Zinkdimethyldithiocarbamat
3,5-Dinitro-o-toluamid
und Gemischen davon.

7. Zusammensetzung nach einem der Ansprüche 1 bis 6, wobei das Kopplungsmittel ein kleineres Molekulargewicht als etwa 300 aufweist.

8. Zusammensetzung nach einem der Ansprüche 1 bis 7, wobei das Kopplungsmittel aus Stickstoff-, Schwefelatomen oder beiden ausgewählte heteroatomare Substituenten enthält.

9. Zusammensetzung nach einem der Ansprüche 1 bis 8, die eine filmbildende Anstrichzusammensetzung umfaßt.

10. Zusammensetzung nach einem der Ansprüche 1 bis 9, wobei das Antifoulingmittel chemisch oder physikalisch in zementartige Oberflächen eingebaut ist.

## Revendications

1. Composition antisalissure marine constituée d'un liant thermoplastique ou thermodurcissable, d'un solvant et d'un agent antisalissure, caractérisée en ce que l'agent antisalissure comprend un composé pesticide ou herbicide ayant une valeur χ entre environ 0,01 et 0,5, un paramètre Z pour les composés vinyliques ou aromatiques entre environ 0,01 et 0,08 et une valeur LD50 supérieure à 200 mg/kg contre les rats ou souris, dans laquelle l'agent antisalissure a été mis en réaction avec un agent de couplage contenant une fonctionnalité pour une réaction ultérieure de manière à former un oligomère ou polymère comportant cet agent antisalissure.

2. Composition suivant la revendication 1, dans laquelle la valeur χ est établie par ledit agent contenant des hétéroatomes choisis parmi le soufre, l'oxygène, l'azote, les halogènes et leurs mélanges.

3. Composition suivant la revendication 1, dans laquelle l'agent antisalissure est choisi parmi des composés hétérocycliques, des composés aromatiques contenant des substituants hétéroatomiques, des composés aminés et des éthers vinyliques de cétones carbocycliques.

4. Composition suivant la revendication 3, dans laquelle le composé aromatique avec des substituants hétéroatomiques est choisi parmi des composés monoaromatiques, des noyaux aromatiques condensés et des composés diaromatiques liés avec une liaison sigma, un groupe dialkylène ou un groupe hétéroatomique divalent et leurs mélanges.

5. Composition suivant la revendication 1, dans laquelle l'agent antisalissure est choisi parmi :
4-allyl-2-méthoxyphénol
diphénylacétonitrile
2,3-dichloro-1,4-naphtoquinone
chlorure de cétylpyridinium
diphénylamine
acide borique
2-chloro-N,N-diallylacétamide
bromure de cétyltriméthylammonium
2-isopropylamino-4-chloro-6-éthylamino triazine dérivé de diméthoxythiophosphate de diphényl sulfure
4-chloro-alpha(4-chlorophényl)alpha-hydroxybenzène acétate d'éthyle
dérivé de méthyl, diéthylamino, diméthoxythiophosphate de pyrimidine
nonylphénol éthoxylé
dérivé d'hydrazine d'acide succinique non symétrique
allyl ester de cyclopentanone substitué par méthylhydroxy d'acide diméthylpropényl cyclopropane carboxylique
acide 2,5-dichloro-3-amino benzoïque
acide cinnamique
2,6-dichloro-4-nitroaniline
dichloro, isopropényl anilide
monoacétate de dodécylguanidine
acide trichlorophényl acétique
dérivé chlorophénylique d'éther diphénylique de l'ester d'acide isobutyrique d'hydroxyacétonitrile
acide trihydroxybenzoïque
acide 3-indolacétique
3,5-dichloro-N-(3,3-diméthylpropyne)benzamide sel d'ammonium de diméthylphosphoramide
naphtalène acétamide
suinte de diméthyléthylphénoxy-cyclohexyl-2-propynyle
o-phénylphénol
acide phtalique
chlorophényl-isopropyl, propynyl carbamate
N-phényl-N-butynyl chloroacétamide
dérivé amino, chloro, phénylique d'azocyclohexamine
N,N-diallyl-2-chloroacétamide
dérivé d'acide aminoacétique de méthylphosphonate
3,5-dinitro-4-N,N-dipropylamino benzène sulfonamide
2-chloro-2-propényl diéthylcarbamodithioate,
et leurs mélanges.

6. Composition suivant la revendication 1, dans laquelle l'agent antisalissure est choisi parmi :
phénylhydrazone d'acroléine
saccharinate d'alkyl diméthyl benzène ammonium
ester de 2-allyl-4-hydroxy-3-méthyl-2-cyclopentén-1-one et d'acide 2,2-diméthyl-3-(2-méthylpropényl cyclopropanecarboxylique)
4-allyl-2-méthoxyphénol
o-(allyloxy) phényl méthylcarbamate
2-(allylthio)-2-thiazoline
1,2,3,4,7,7-hexachloro-5,6-bis(chlorométhyl)-2-norbornène
4-éthylamino-6-isopropylamino-2-méthylthio-1,3,5-triazine
2-amino-3-chloro-1,4-naphtoquinone
3-amino-5-nitro-o-toluamide
3-amino-1,2,4-triazole
sulfamate d'ammonium
tartrate de potassium et d'antimoine
2-chloro-4-éthylamino-6-isopropylamino-s-triazine
4-chloro-m-chlorocarbanilate
6-chloropipéronyl chrysanthémumate
N-butyl-N-éthyl-α,α,α-trifluoro-2,6-dinitro-p-toluidine
bis(p-chlorophényl)-3-pyridine méthanol
bis(dialkylphosphinothioyl) disulfure
dichlorure de bis(4-hydroxyiminométhyl pyridinium-1-méthyl) éther
2,4-bis(3-méthoxypropylamino)-6-méthylthio-s-triazine
bis(pentachloro-2,4-cyclopentadién-1-yle)
acide borique
N-(4-bromo-3-chlorophényl)-N'-méthoxy-N'-méthyl urée
5-(bromométhyl)-1,2,3,4,7,7-hexachloro-2-norbornène
S-(O,O-diisopropyl phosphoro-dithionate de N-(2-mercaptoéthyl) benzènesulfonamide
acide benzamidooxyacétique
3-benzylidèneamino-4-phénylthiazoline-2-thione
bis (p-chlorophénoxy) méthane
bis (4-chlorophényl) disulfure
1,1-bis (p-chlorophényl) éthane
1,1-bis (p-chlorophényl) éthanol
O,O-diméthyl-O-2,5-dichloro-4-bromophénylthionophosphate
O,O-diméthyl-2,2,2-trichloro-1-n-butyryloxyéthyl phosphonate
N-butylacétanilide
2-tert-butylamino-4-chloro-6-éthyl amino-s-triazine
2-tert-butylamino-4-éthylamino-6-méthylmercapto-s-triazine
4-tert-butyl-2-chlorophénylméthylméthylphosphoramidite
O-(4-tert-butyl-2-chlorophényl)-O-méthylphosphoramidothionate
butyl 3,4-dihydro-2,2-diméthyl-4-oxo-1,2H-pyranne-6-carboxylate
n-butyl-9-hydroxyfluorène-(9)-carboxylate
2-(p-tert-butylphénoxy) cyclohexyl 2-propynyl sulfite
1-butyn-3-yl m-chlorophényl-carbamate
N-trichloro-méthylthio-4-cyclohexène-1,2-dicarboximide
1-naphtyl N-méthylcarbamate
S-[[(p-chlorophényl) thiol] méthyl] O,O-diéthylphosphorodithioate
2-chloro-N,N-diallyl-acétamide
2-chloroallyl diéthyl-dithiocarbamate
bromure de cétyldiméthyléthylammonium
chlorure de cétyl pyridinium
tétrachloro-p-benzoquinone
2-chloro-4,6-bis(diéthylamino)-s-triazine
p-chlorobenzyl p-chlorophényl sulfure
1,2,3,5,6,7,8,8-octachloro-2,3,3a,4,7,7a-hexahydro-4,7-méthanoindène
chlorure de 1-(3-chlorallyl)-3,5,7-triaza-1-azoniaadamantane
4,4'-dichlorobenzilate d'éthyle
sel de zinc de 5-chloro-2-benzothiazolethiol
p-chlorobenzyl p-fluorophényl sulfure
1-chloro-N'-(3,4-dichlorophényl) N,N-diméthylformamidine
4-chloro-3,5-diméthyl phénoxyéthanol
1,4-dichloro-2,5-diméthoxybenzène
1-(chloro-2-norbornyl)-3,3-diméthylurée
S-(p-chloro-α-phénylbenzyl) O,O-diéthyl phosphorodithioate
p-chlorophényl ester d'acide benzènesulfonique
N-3-chlorophényl-1-(isopropyl-carbamoyl-1)-éthylcarba-mate
3-(p-chlorophényl)-5-méthyl rhodanine
sel de sodium de 4 (et 6)-chloro-2-phénylphénol
p-chlorophényl phényl sulfone
4-chlorophényl 2,4,5-trichlorophénylazosulfure
N-(5-chloro-5-thiazolyl)propionamide
2-[(4-chloro-o-tolyl)oxy] propionanilide
2-chloro-1-(2,4,5-trichloro-phényl) vinyl diméthyl phosphate
N'-(4-chlorophénoxy) phényl N,N-diméthylurée
Isopropyl N-(3-chlorophényl) carbamate oléate de cuivre (cuprique)
8-quinoléinolate de cuivre
O,O-diéthylphosphorothioate de lactone d'acide 2-(2,4-dihydroxyphényl)-1-cyclohexène-1-carboxylique
2-chloro-4-diméthylamino-6-méthylpyrimidine
3-(2-cyclopentén-1-yl)-2-méthyl-4-oxo-2-cyclopentén-1-yl chrysanthémumate
chlorhydrate d'α-cyclohexyl-α-phényl-3-pyridyl-méthanol
N'-cyclo-octyl-N,N-diméthylurée
3',4'-dichlorocyclopropanecarboxanilide
acide 2,4-dichlorophénoxyacétique
ester 2,4-d,α-chlorocrotylique
3,5-diméthyl-1,3,5,2H-tétrahydrothiadiazine-2-thione
tétra-hydro-3,5-diméthyl-2H-1,3,5-thiadiazine-2-thione
acide 4-(2,4-dichlorophénoxy) butyrique
diméthyl 2,3,5,6-tétra-chlorotéréphtalate
décyltriphénylphosphonium-bromochlorotriphénylstannate
acide déshydroacétique (et son sel sodique)
tris et bis(2,4-dichlorophénoxyéthyl) phosphites
2-méthyl-thio-4-isopropylamino-6-méthylamino-s-triazine
S-2,3-dichloroallyl N,N-diisopropylthiolcarbamate
1,3-diaza-2,4-cyclopentadiène
N,N-di-n-butyl-p-chlorobenzène sulfonamide
acide 3,6-dichloro-o-anisique
O-(2-chloro-4-nitrophényl) O,O-diméthyl phosphorothioate 2,6-dichlorobenzonitrile
2,3-dichloro-1,4-naphtoquinone
1,3-bis(1-hydroxy-2,2,2-trichloroéthyl) urée
mélange de 3,4-dichlorobenzyl méthylcarbamate (80 %) et de 2,3-dichlorobenzyl méthylcarbamate (20 %)
1,1-dichloro-2,2-bis (p-éthylphényl)éthane
2,4-dichloro-6-(o-chloro-anilino)-s-triazine
N-(dichlorofluorométhylthio)-N',N'-diméthyl-N-phényl sulfamide
4,4'-dichloro-N-méthylbenzène sulfoanilide
sel sodique d'acide 2,3-dichloro-2-méthylpropionique
2,6-dichloro-4-nitroaniline
acide 2,5-dichloro-3-nitrobenzoïque
sel d'éthanolamine de 5,2'-dichloro-4'-nitro-salicylanilide
2',5'-dichloro-4'-nitrososalicylanilide
2,2'-dihydroxy-5,5'-dichlorophénylméthane
1-(2,4-dichlorophénoxyacétyl)-3,5-diméthyl pyrazole
N-3,4-dichlorophényl N'-5-chloro-2-(2-sodium sulfonyl-4-chlorophénoxy) phényl urée
ester 2,4-dichlorophénylique d'acide benzène sulfonique
2,4-dichlorophényl méthanesulfonate
2,4-dichlorophényl 4-nitrophényl éther
4-dichlorotétrahydrothiophène 1,1-dioxyde
4,4'-dichloro-alpha-trichlorométhylbenzhydrol
3',4'-dichloro-2-méthacrylanilide
α(diéthoxyphosphinothioylthio) gamma-butyrolactone
O,O-diéthyl S-carboéthoxyméthyl phosphorothioate
O,O-diéthyl O-naphtylamido phosphorothioate
O,O-diéthyl 0-3,5,6-trichloro-2-pyridyl phosphorothioate
2"-sodium sulfonate de 2,2'-dihydroxy-3,5,3',5',4"-pentachlorotriphénylméthane
O,O-diisopropyl S-diéthyldithiocarbamoyl phosphorodithioate
2,4-diméthylbenzyl 2,2-diméthyl-3-(2-méthylpropényl)cyclopropane carboxylate
O,O-diméthyl-S-2-(acétylamino)éthyl dithiophosphate
acide N-diméthylamino succinamique
1,1-diméthyl-3-[3-(N-tert-butyl-carbamoyloxy)phényl]urée
O,O-diméthyl S-carboéthoxyméthyl phosphorothioate
O,O-diméthyl O-(3-chloro-4-nitrophényl) phosphorothioate
O,O-diméthyl-O-p-cyanophényl phosphorothioate
O,O-diméthyl-S-[5-éthoxy-1,3,4-thiadiazol-2(3H)-onyl-(3)-méthyl]phosphorodithioate
chlorhydrate de N,N-diméthyl-N'-(2-méthyl-4-chlorophényl)-formamidine
O,O-diméthyl O-(4-nitro-m-tolyl)phosphorothioate
O,S-diméthyl tétrachloro thiotéréphtalate
4'-diméthyltriazénoacétanilide
dinitrocyclohexylphénol
2,4'-dinitro-4-trifluorométhyl diphényléther
2-(1-méthyl-n-heptyl)-4,6-dinitrophényl crotonate
N,N-diméthyl-2,2-diphénylacétamide
diphénylacétronitrile
diphénylamine
2,6-dinitro-N,N-di-n-propyl-p-toluidine
di-n-propyl-2,5-pyridine-dicarboxylate
dibromure de 1,1'-éthylène-2,2'-dipyridinium
2,3-dicyano-1,4-dithia-anthraquinone
3-(3,4-dichlorophényl)-1,1-diméthylurée
n-dodécyl thiocyanate
n-dodécylguanidine acétate
éthyl N,N-dipropylthiolcarbamate
2-(2,4,5-trichlorophénoxy)éthyl-2,2-dichloropropionate
éthoxyméthylbis (p-chlorophényl) carbinol
1,2-dihydro-6-éthoxy-2,2,4-triméthylquinone
éthyl-N,N-diisobutyl thiolcarbamate
éthylènebis (dithiocarbamato) zinc
trichloroacétate de 3-phényl-1,1-diméthylurée
diméthyldithiocarbamate ferrique
O,O-diméthyl S-(N-formyl-N-méthylcarbamoylméthyl)phosphorodithioate
acide 2-formyl-4-chlorophénoxyacétique
3-furfuryl-2-méthyl-4-oxo-2-cyclopentén-1-yl chrysanthémumate
2-heptadécyl-2-imidazoline
7-chloro-4,6-diméthoxycoumaran-3-one-2-spiro-1'-(2'-méthoxy-6'-méthylcyclohex-2'-én-4'-one)
1,1,1,3,3,3-hexachloro-2-propanone
1,5a, 6,9,9a,9b-hexahydro-4a(4H)-dibenzofuranne carboxaldéhyde
chlorure de 9-(p-n-hexyloxyphényl)-10-méthylacridinium
acide 2-hydroxyméthyl-4-chlorophénoxyacétique
N-hydroxyméthyl-2,6-dichlorothiobenzamide
isopropyl N-phénylcarbamate
isobornyl thiocyanoacétate
isobutyl triphénylméthylamine
5-bromo-3-isopropyl-6-méthyluracile
isopropyl-4,4'-dibromobenzilate
isopropyl 4,4'-dichlorobenzilate
O,O-diméthyl phosphorodithioate d'isopropyl mercaptophénylacétate
3-cyclohexyl-6,7-dihydro-1H-cyclopentapyrimidine-2,4-(3H,5H) diane
3-(3,4-dichlorophényl)-1-méthoxy-1-méthylurée
S-[1,2-bis(éthoxy-carbonyl) éthyl] O,O-diméthyl phosphorodithioate
éthylènebisdithiocarbamate de manganèse
acide 4-chloro-2-méthylphénoxyacétique
acide 2-(4-chloro-2-méthylphénoxy) propionique
sec-butyl 4 (ou 5) -chloro-2-méthylcyclohexanecarboxylate
S-[(4,6-diamino-s-triazine-2-yl)méthyl]O,O-diméthyl phosphorodithioate
2-isopropylamino-4-(3-méthoxypropylamino)-6-méthylthio-s-triazine
1,1,1-trichloro-2,2-bis(p-méthoxyphényl) éthane
2-méthoxy-4-isopropylamino-6-diéthylamino-s-triazine
S-(N-méthoxyméthylcarbamoylméthyl) diméthyl phosphorothiolothiononate
alpha-méthylbenzyl 3-(diméthoxyphosphinyloxy)-cis-crotonate
m-(1-méthyl butyl) phényl méthylcarbamate
méthyl-2-chloro-9-hydroxyfluorène-(9) carboxylate
3,3'-méthylènebis (4-hydroxycoumarine)
2,2'-méthylènebis (3,4,6-trichlorophénol)
6-méthyl-2-oxo-1,3-dithio(4,5-b)quinoxaline
O,O-diméthyl S-(2,5-dichlorophénylthio) méthyl phosphorodithioate
3(2-méthylpipéridino)propyl-3,4-dichlorobenzoate
4-(méthylsulfonyl)-2,6-dinitro-N,N-dipropylaniline
méthyl-2,3,5,6-tétrachloro-N-méthoxy-N-méthyltéréphtalamate
O-méthyl O-(2,4,5-trichlorophényl) amidophosphorothionate
3-(p-bromophényl)-1-méthyl-1-méthoxyurée
1,2-dihydropyridazine-3,6-dione
3,3'-éthylènebis-(tétrahydro-4,6-diméthyl-2H-1,3,5-thiadiazone-2-thione)
S-éthyl hexahydro-1H-azépine-1-carbothioate
3-(p-chlorophényl)-1,1-diméthylurée
trichloroacétate de 3-(p-chlorophényl)-1,1-diméthylurée
éthylène bisdithiocarbamate disodique
1,2-dibromo-2,2-dichloroéthyl diméthyl phosphate
acide bêta-naphtoxyacétique
3-(3,4-dichlorophényl)-1-méthyl-1-n-butylurée
3-(hexahydro-4,7-méthanoindan-5-yl)-1,1-diméthylurée
acide N-1-naphtylphtalamique
p-chlorophényl p-phényl 4-chlorobenzènesulfonate
S-propylbutyléthylthiocarbamate
phénothiazine
éthyl mercaptophénylacétate O,O-diméthylphosphorodithioate
N-phényl-1-(éthylcarbamoyl-1) éthylcarbamate (isomère d)
ester 2-chloro-1-(2,4,5-trichlorophényl)vinyl diméthylique d'acide phosphorique
acide 4-amino-3,5,6-trichloropicolinique
pipéronyl-bis(2-[2'-n-butoxyéthoxy]éthyl) acétal
alpha[2-(2-n-butoxyéthoxy)éthoxy]4,5-méthylènedioxy-2-propyltoluène de pipéronyl butylate
pipéronyl cyclonène
sel de diméthylamine d'acide polychlorobenzoïque
2,4-bis-(isopropylamino)-6-méthoxy-s-triazine
2-méthylmercapto-4,6-bis(isopropylamino)-s-triazine
2-chloro-N-isopropylacétanilide
3',4'-dichloropropionalide
2-chloro-4,6-bis(isopropylamino)-s-triazine
di-n-propyl-3-méthyl-6,7-méthylènedioxy-1,2,3,4-tétrahydronaphtalène-1,2-dicarboxylate
5-amino-4-chloro-2-phényl-3(2H) pyridazinone
pyréthrine I
8-quinoléinol
diméthyl 2,4,5-trichlorophényl phosphorothionate salicylanilide
1-(3,4-méthylènedioxyphénoxy)-3,6,9-trioxoundécane
2-(2,4-dichlorophénoxy)éthyl sulfate de sodium
1-(2-méthyl-cyclohexyl)-3-phénylurée
acide 1-(2,4,5-trichlorophénoxy) propionique
N'-chloro-2-méthyl-p-valérotoluidine
1,2-méthylènedioxy-4-[2-(octylsulfinyl)propyl] benzène
méthyl 3,4-dichlorocarbanilate
acide 2,4,5-trichlorophénoxyacétique
chlorure de trichlorobenzyle
2,2-bis(p-chlorophényl)-1,1-dichloroéthane
éthylène-1,2-bis(thiocarbamoyldiméthylthiocarbamoyldisulfure)
3-tert-butyl-5-chloro-6-méthyluracile
2,6-di-tert-butyl-p-tolylméthylcarbamate
2,3,6,7-tétrachloro-4a,8a-époxy-1,2,3,4,4a,8a-hexahydro-1,4-méthanonaphtalène-5,8-dione
N-(1,1,2,2-tétrachloroéthylsulfényl)-cis-α-4-cyclohexène-1,2-dicarboximide
2,4,5,6-tétrachloroisophtalonitrile
1,2,4,5-tétrachloro-3-nitrobenzène
p-chlorophényl 2,4,5-trichlorophényl sulfone
5,6,7,8-tétrahydro-1-naphtyl méthylcarbamate
3,4,5,6-tétrahydrophtalimidométhyl 2,2-diméthyl-3-(2-méthylpropényl) cyclopropanecarboxylate
O,O,O',O'-tétraméthyl O,O'-thiodi-p-phénylène phosphorothioate
1,3,6,8-tétranitrocarbazole
2-(4-thiazolyl) benzimidazole
2,2'-thiobis(4,6-dichlorophénol)
2-thiocyanoéthyl dodécanoate
trithiocarbonate cyclique de 2,3-quinoxalinedithiol
disulfure de tétraméthylthiuram
acide N-méta-tolyl phtalamique
S-2,3,3-trichloroallyl N,N-di-isopropylthiolcarbamate
O,O-diméthyl (1-hydroxy-2,2,2-trichloroéthyl)phosphonate
acide 2,3,6-trichlorobenzoïque
sel de diméthylamine d'acide trichlorobenzoïque
4,5,7-trichlorobenzothiadiazole-2,1,3
2,3,6-trichlorobenzyloxypropanol
N-trichlorométhylthiobenzothiazolone
N-trichlorométhylthiobenzoxazolone
chlorure de 2,2,2-trichloro-N-(pentachlorophényl) acétimidoyle
sel sodique de 2-(2,4,5-trichlorophénoxy)éthyl sulfate
N,N",N"-trichloro-2,4,6-triamine-1,3,5-triazine
2-chloro-4-(diéthylamino)-6-(éthylamino)-s-triazine
tert-butyl 4 (au 5)-chloro-2-méthylcyclohexanecarboxylate
S-propyldipropylthiocarbamate
éthylène bisdithiocarbamate de zinc
diméthyldithiocarbamate de zinc
3,5-dinitro-o-toluamide,
et leurs mélanges.

7. Composition suivant l'une quelconque des revendications 1 à 6, dans laquelle l'agent de couplage a un poids moléculaire inférieur à environ 300.

8. Composition suivant l'une quelconque des revendications 1 à 7, dans laquelle l'agent de couplage contient des substituants hétéroatomiques choisis parmi l'azote, le soufre ou les deux.

9. Composition suivant l'une quelconque des revendications 1 à 8, qui comprend une composition de revêtement filmogène.

10. Composition suivant l'une quelconque des revendications 1 à 9, dans laquelle l'agent antisalissure est incorporé chimiquement ou physiquement dans des surfaces cimenteuses.
